# EUROPEAN PATENT SPECIFICATION

(11) **EP 2 137 227 B1**
(45) Date of publication and mention of the grant of the patent: **28.09.2011**
(21) Application number: 08832553.5
(22) Date of filing: 28.03.2008
(51) Int. Cl.: C08G 63/00, C08L 67/04

(54) **POLYESTER COMPOSITIONS HAVING IMPROVED HEAT RESISTANCE**
POLYESTERZUSAMMENSETZUNG MIT ERHÖHTER HITZERESISTENZ
COMPOSITIONS DE POLYESTER AYANT UNE RÉSISTANCE À LA CHALEUR AMÉLIORÉE

(30) Priority: 29.03.2007 US 692962
(43) Date of publication of application: 30.12.2009
(73) Proprietor: SABIC Innovative Plastics IP B.V., 4612 PX Bergen op Zoom (NL)
(72) Inventor: GANESAN, Balakrishnan, Karnataka 560037 (IN); PAL, Subodh, Kumar, Karnataka 560093 (IN); RAMARAJU, Deepak, Karnataka 560079 (IN); RAVI, Gomatam, Raghavan, Karnataka 560008 (IN); SHAIKH, Abbas Alli Ghudubhai, Karnataka 560037 (IN); WAGLE, Govind, Subbanna, Karnataka 560093 (IN)
(74) Representative: Müller, Frank Peter
(86) International application number: PCT/IB2008/003316
(87) International publication number: WO 2009/037574

(56) References cited:
- WO-A-02/36659
- WO-A-2007/084478
- US-A- 4 152 511
- US-A- 5 668 224
- US-A1- 2007 167 544

## Description

### BACKGROUND

The invention relates to polyester compositions, their blends with polycarbonate, methods to synthesize the compositions and articles made from the compositions.

Polyesters with high char proprieties are beneficial as they render the polyester flame retardant thereby inhibiting the propagation of flame. Polyesters are not inherently char forming and hence flame retardant additives are ordinarily added to the compositions containing polyester to impart char forming properties to the polyesters. However, addition of these flame retardants additives can deleteriously affect the flexibility and also other mechanical properties of the polyesters, because a large quantity of flame retardants are typically needed to make the composition flame retardant. If a polyester composition were high char forming without the need of an appreciable amount of additives, the use of flame retardant additives could be considerably reduced, thereby also leading to decrease in cost of flame retardant polyester compositions.

Several attempts have been made to increase the char of polyester resins. The use of para-xylene glycol as a monomer to prepare copolyesters by the solution route is disclosed in U.S. Pat. Nos. 2,967,854; 5,011,877; 5,955,565 and 5,194,574. Injection molded articles with stilbene carboxylic acid as the diacid component have been disclosed in U.S. Pat. Nos. 4,824,931; 4,728,717; 4,739,033; and U.S. Pat. Pub.20050197484 where in para-xylene glycol is used an amount of less than 20 mole percent. Copolyester articles with less than 15 mole percent of other diols like para-xylene glycol are taught in U.S. Pat. No. 6,485,804 and EP0506227. JP05059163 discloses a transparent blow molded article comprising a polyester where the polyester is made up of terephthalic acid and 5-40 mole percent of para-xylene glycol with other diols. JP52023196 discloses a high molecular weight polyester composition with para-xylene glycol as the diol component. JP11335450 discloses a copolyester composition for gas barrier vessels comprising para-xylene glycol in a range of 5-50 mole percent with ethylene glycol and a phosphorus compound derived from phosphoric acid. However, such compositions are not known to produce polyesters having a combination of both high heat resistance and high char-forming properties without loss in the mechanical properties.

Japanese article by Hashimoto et. al. (Kobunshi Kagaku (1965), 22 (248), pages 816-822) describes polyesters with 4,6-dimethyl-*m*-xylene glycol where in the solubility of the polyester increases with approximately 40 mole percent of the 4,6-dimethyl-m-xylene glycol component. The use of 4,6-dimethyl-*m*-xylene glycol in polyesters with aromatic glycols and aromatic diacids is described in JP 49046037. The polyester with oxalic acid and 2,5-dimethyl-*p*-xylene glycol was found to have good hyrdrolytic stability. Blow molded and thick wall molded articles with good transparency and impact resistance made of polyesters derived from ethylene glycol and terephthalic acid with 3-15 mole percent of mono, di, tri or tetra substituted xylene glycol is described Japanese patent application number. Such compositions are not known to produce polyesters having a combination of both high heat resistance and high char-forming properties without loss in the mechanical properties.

Polycarbonate (PC) is a useful engineering plastic for parts requiring clarity, high toughness, and, in some cases, good heat resistance. However, polycarbonate also has some important deficiencies, among them poor heat, chemical and stress crack resistance, poor resistance to sterilization by gamma radiation, and poor processability. Blends of polyesters with polycarbonates provide thermoplastic compositions having improved properties over those based upon either of the single resins alone. Moreover, such blends are often more cost effective than polycarbonate alone. Transparent, miscible compositions of any two polymers are rare. The term "miscible", as used in the specification, refers to compositions that are a mixture on a molecular level wherein intimate polymer-polymer interaction is achieved. Miscible compositions are transparent, not opaque. In addition, differential scanning calorimetry testing detects only a single glass transition temperature (Tg) for miscible blends composed of two or more components. Thus miscibility of PC with the polyesters gives the blends the clarity needed.

Clear polycarbonate/polyester blends have been reported. US. Pat. Nos. 4,619,976 and 4,645,802, for instance, disclose clear blends based on bisphenol A polycarbonate with polyesters of poly(1,4- tetramethylene terephthalate), poly(1,4-cyclohexylenedimethylene terephthalate) and selected copolyesters and copoly(ester-imides) of poly(1,4-cyclohexylenedimethylene terephthalate). U.S. Pat. No. 4,786, 692 discloses clear blends of bisphenol A polycarbonate and polyesters of terephthalic acid, isophthalic acid, ethylene glycol, and 1,4- cyclohexanedimethanol. U.S. Pat. Nos. 4,188,314 and 4,391,954 disclose clear blends of bisphenol A polycarbonate with poly(1,4-cyclohexylenedimethylene terephthalate-co-isophthalate). U.S 4,188,314, US 4,125,572; US 4,391,954; US 4,786,692; US 4,897,453, and 5,478,896 relate to blends of an aromatic polycarbonate and poly (cyclohexane dimethylene) phthalate. U.S 4,125,572 relates to a blend of polycarbonate, polybutylene terephthalate (PBT) and an aliphatic / cycloaliphatic iso/terephthalate resin. These polyester blends do have improved chemical resistance and melt processability, when compared to unblended bisphenol A polycarbonate. However, the heat resistance and impact strength of bisphenol A polycarbonate blends based on these compositions is reduced significantly relative to polycarbonate alone.

Miscible blends of polycarbonate with polyesters containing less than about 10 mole percent of para-xylene glycol have been disclosed in U.S. Pat. Nos. 5,942,585 and 4,564,541. Blends of polyesters modified with less than about 40 mole percent of diols such as para-xylene glycol with polycarbonate to give transparent blends have been taught in U.S2005019784A1 and EP0183141A2. JP07188523 and JP07188525 disclose polycarbonate-polyester blends with para-xylene glycol along with impact modifiers like butyl acrylate-glycidyl methacrylate copolymers. Such compositions are not known to produce polyester-polycarbonate blends having a combination of high heat resistance, high char-forming and good optical properties without loss in the mechanical properties.

There exists an unmet need to provide an article with a good balance of optical property, improved heat resistance, processability, solvent resistance, and mechanical properties and flame resistance.

For the foregoing reasons, there is an unmet need to develop a polyester composition having a combination of high heat and high char without loss in the mechanical properties.

For the foregoing reasons, there is an unmet need to develop methods for making blend compositions that can provide a combination of high heat, high char and good optical properties without loss in the mechanical properties.

For the foregoing reasons, there is an unmet need to develop articles derived from such polyester compositions that can provide a combination of high heat and high char without loss in the mechanical properties.

For the foregoing reasons, there is an unmet need to develop articles derived from such blend compositions that can provide a combination of high heat, high char and good optical properties without loss in the mechanical properties.

For the foregoing, the industry needs to develop technologies that can provide molding compositions having useful mechanical and optical properties with polyesters having high heat resistance and high char-forming properties.

### BRIEF DESCRIPTION OF THE INVENTION:

According to one embodiment of the present invention, the invention relates to a composition of matter comprising a polyester derived from: (i) greater than 80 mole percent of a diol having from a disubstituted xylene glycol structure of the formula (I): 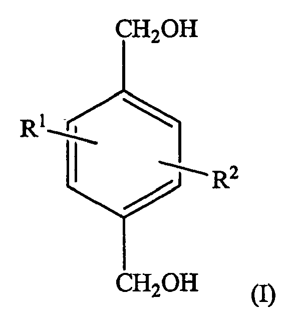 wherein R¹ and R² are independently selected from the group consisting of aliphatic radicals, aromatic radicals, cycloaliphatic radicals, sulfur containing compounds, and amines and (ii) a diacid.

According to one embodiment of the present invention, the invention relates to a composition of matter comprising: a transparent blend of
i. from 5 to 95 weight percent of a polyester derived from
   a. greater than 80 mole percent of a diol derived from a disubstituted xylene glycol of the formula (I): 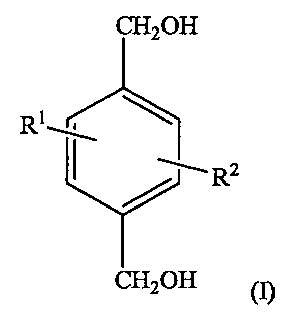 wherein R¹ and R² are independently selected from the group consisting of aliphatic radicals, aromatic radicals, cycloaliphatic radicals, sulfur containing compounds, amines and halogen; and
   b. a diacid; and
ii. from 5 to 85 weight percent of a polycarbonate.

In another embodiment, the invention relates to a process comprising:
i. mixing
   a. greater than 80 mole percent of a disubstituted xylene glycol of formula (I): 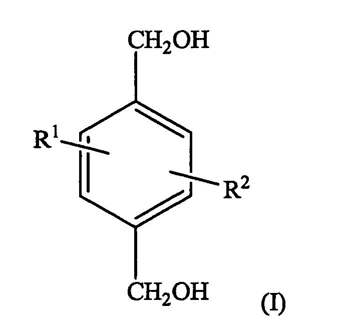 wherein R¹ and R² are independently selected from the group consisting of aliphatic radicals, aromatic radicals, cycloaliphatic radicals, sulfur containing compounds, amines and halogen; and
   b. a diacid, to form a first mixture;
ii. heating the first mixture at a temperature sufficiently high to form a composition of matter comprising a polyester derived from the disubstituted xylene glycol and the diacid.

In another embodiment, the invention relates to a process comprising:
a. mixing a polyester and a polycarbonate to form a first mixture;
b. heating the first mixture at a temperature sufficiently high to form a composition of matter comprising a transparent blend of
   i. greater than 80 mole percent of a polyester derived from a disubstituted xylene glycol of the formula (I): 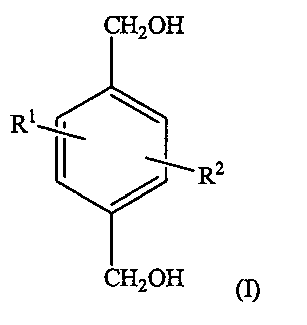 wherein R¹ and R² are independently selected from the group consisting of aliphatic radicals, aromatic radicals, cycloaliphatic radicals, sulfur containing compounds, amines and halogen, and a diacid;
   ii. from 5 to 85 weight percent of a polycarbonate.

In another embodiment, the invention relates to an article molded from such a composition.

In another embodiment, the invention relates to a method of making an article by extruding, molding, or shaping the above-described compositions into an article.

And in another embodiment, the invention relates to a composition of matter comprising a polyester derived from:
i. greater than 80 mole percent of a diol derived from a disubstituted xylene glycol of the formula (I): 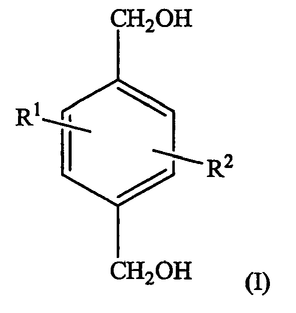 wherein R¹ and R² are independently selected from the group consisting of aliphatic radicals, aromatic radicals, cycloaliphatic radicals, sulfur containing compounds, amines and halogen;
ii. a diacid;
iii. from 0 to 10 weight percent of an additive selected from the group consisting of anti-oxidants, flame retardants, flow modifiers, impact modifiers, colorants, mold release agents, UV light stabilizers, heat stabilizers, lubricants, antidrip agents and combinations thereof; and
iv. from 0 to 40 weight percent of a filler selected from the group consisting of calcium carbonate, mica, kaolin, talc, glass fibers, carbon fibers, carbon nanotubes, magnesium carbonate, sulfates of barium, calcium sulfate, titanium, nano clay, carbon black, silica, treated clays, hydroxides of aluminum, hydroxides of ammonium, hydroxides of magnesium, zirconia, nanoscale titania, or a combination thereof;
wherein the polyester has a glass transition temperature of at least 60 °C and a char yield of at least 4 %.

Various other features, aspects, and advantages of the present invention will become more apparent with reference to the following description, examples, and appended claims.

### DETAILED DESCRIPTION OF THE INVENTION

The invention is based on the discovery that it is now possible to make a polyester compositions from a certain combination of a disubstituted para xylene glycol and diacids, (and articles from the composition), which can impart a combination of high heat and char without sacrificing the mechanical and optical properties. The invention is also based on the discovery of high heat blends of these polyesters with polycarbonate.

The singular forms "a," "an" and "the" include plural referents unless the context clearly dictates otherwise.

"Optional" or "optionally" means that the subsequently described event or circumstance may or may not occur, and that the description includes instances where the event occurs and instances where it does not.

"Combination" as used herein includes mixtures, copolymers, reaction products, blends, composites, and the like.

Other than the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. Unless expressly indicated otherwise, the various numerical ranges specified in this application are approximations.

As used herein the term "aliphatic radical" refers to a radical having a valence of at least one comprising a linear or branched array of atoms, which is not cyclic. The array may include heteroatoms such as nitrogen, sulfur, silicon, selenium and oxygen or can be composed exclusively of carbon and hydrogen. Aliphatic radicals can be "substituted" or "unsubstituted." A substituted aliphatic radical is defined as an aliphatic radical which comprises at least one substituent. A substituted aliphatic radical may comprise as many substituents as there are positions available on the aliphatic radical for substitution. Substituents which can be present on an aliphatic radical include but are not limited to halogen atoms such as fluorine, chlorine, bromine, and iodine. Substituted aliphatic radicals include trifluoromethyl, hexafluoroisopropylidene, chloromethyl; difluorovinylidene; trichloromethyl, bromoethyl, bromotrimethylene (e.g. -CH₂CHBrCH₂-), and the like. For convenience, the term "unsubstituted aliphatic radical" is defined herein to encompass, as part of the "linear or branched array of atoms which is not cyclic" comprising the unsubstituted aliphatic radical, a wide range of functional groups. Examples of unsubstituted aliphatic radicals include allyl, aminocarbonyl (i.e. -CONH₂), carbonyl, dicyanoisopropylidene (i.e. -CH₂C(CN)₂CH₂-), methyl (i.e. -CH₃), methylene (i.e. - CH₂-), ethyl, ethylene, formyl, hexyl, hexamethylene, hydroxymethyl (i.e.-CH₂OH), mercaptomethyl (i.e. -CH₂SH), methylthio (i.e. -SCH₃), methylthiomethyl (i.e.-CH₂SCH₃), methoxy, methoxycarbonyl, nitromethyl (i.e. -CH₂NO₂) thiocarbonyl, trimethylsilyl, t-butyldimethylsilyl, trimethyoxysilypropyl, vinyl, vinylidene, and the like. Aliphatic radicals are defined to comprise at least one carbon atom. A C₁- C₁₀ aliphatic radical includes substituted aliphatic radicals and unsubstituted aliphatic radicals containing at least one but no more than 10 carbon atoms.

As used herein, the term "aromatic radical" refers to an array of atoms having a valence of at least one comprising at least one aromatic group. The array of atoms having a valence of at least one comprising at least one aromatic group may include heteroatoms such as nitrogen, sulfur, selenium, silicon and oxygen, or can be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthraceneyl groups (n = 3) and the like. The aromatic radical may also include nonaromatic components. For example, a benzyl group is an aromatic radical which comprises a phenyl ring (the aromatic group) and a methylene group (the nonaromatic component). Similarly a tetrahydronaphthyl radical is an aromatic radical comprising an aromatic group (C₆H₃) fused to a nonaromatic component -(CH₂)₄⁻. Aromatic radicals can be "substituted" or "unsubstituted." A substituted aromatic radical is defined as an aromatic radical which comprises at least one substituent. A substituted aromatic radical may comprise as many substituents as there are positions available on the aromatic radical for substitution. Substituents which can be present on an aromatic radical include, but are not limited to halogen atoms such as fluorine, chlorine, bromine, and iodine. Substituted aromatic radicals include trifluoromethylphenyl, hexafluoroisopropylidenebis(4-phenyloxy) (i.e. - OPhC(CF₃)₂PhO-), chloromethylphenyl; 3-trifluorovinyl-2-thienyl; 3-trichloromethylphenyl (i.e. 3-CCl₃Ph-), bromopropylphenyl (i.e. BrCH₂CH₂CH₂Ph-), and the like. For convenience, the term "unsubstituted aromatic radical" is defined herein to encompass, as part of the "array of atoms having a valence of at least one comprising at least one aromatic group"" a wide range of functional groups. Examples of unsubstituted aromatic radicals include 4-allyloxyphenoxy, aminophenyl (i.e. H₂NPh-), aminocarbonylphenyl (i.e. NH₂COPh-), 4-benzoylphenyl, dicyanoisopropylidenebis(4-phenyloxy) (i.e. -OPhC(CN)₂PhO-), 3-methylphenyl, methylenebis(4-phenyloxy) (i.e. -OPhCH₂PhO-), ethylphenyl, phenylethenyl, 3-formyl-2-thienyl, 2-hexyl-5-furanyl; hexamethylene-1,6-bis(4-phenyloxy) (i.e. - OPh(CH₂)₆PhO-); 4-hydroxymethylphenyl (i.e. 4-HOCH₂Ph-), 4-mercaptomethylphemyl (i.e. 4-HSCH₂Ph-), 4-methylthiophenyl (i.e. 4-CH₃SPh-), methoxyphenyl, methoxycarbonylphenyloxy (e.g. methyl salicyl), nitromethylphenyl (i.e. -PhCH₂NO₂), trimethylsilylphenyl, t-butyldimethylsilylphenyl, vinylphenyl, vinylidenebis(phenyl), and the like. The term "a C₃ - C₁₀ aromatic radical" includes substituted aromatic radicals and unsubstituted aromatic radicals containing at least three but no more than 10 carbon atoms. The aromatic radical 1-imidazolyl (C₃H₂N₂-) represents a C₃ aromatic radical. The benzyl radical (C₇H₈-) represents a C₇ aromatic radical.

As used herein, the term "cycloaliphatic radical" refers to a radical having a valence of at least one, and comprising an array of atoms which is cyclic but which is not aromatic. As defined herein a "cycloaliphatic radical" does not contain an aromatic group. A "cycloaliphatic radical" may comprise one or more noncyclic components. For example, a cyclohexylmethy group (C₆H₁₁CH₂-) is an cycloaliphatic radical which comprises a cyclohexyl ring (the array of atoms which is cyclic but which is not aromatic) and a methylene group (the noncyclic component). The cycloaliphatic radical may include heteroatoms such as nitrogen, sulfur, selenium, silicon and oxygen, or can be composed exclusively of carbon and hydrogen. Cycloaliphatic radicals can be "substituted" or "unsubstituted." A substituted cycloaliphatic radical is defined as a cycloaliphatic radical which comprises at least one substituent. A substituted cycloaliphatic radical may comprise as many substituents as there are positions available on the cycloaliphatic radical for substitution. Substituents which can be present on a cycloaliphatic radical include but are not limited to halogen atoms such as fluorine, chlorine, bromine, and iodine. Substituted cycloaliphatic radicals include trifluoromethylcyclohexyl, hexafluoroisopropylidenebis(4-cyclohexyloxy) (i.e. -OC₆H₁₁C(CF₃)₂C₆H₁₁O-), chloromethylcyclohexyl; 3-trifluorovinyl-2-cyclopropyl; 3-trichloromethylcyclohexyl (i.e. 3-CCl₃C₆H₁₁-), bromopropylcyclohexyl (i.e. BrCH₂CH₂CH₂C₆H₁₁-), and the like. For convenience, the term "unsubstituted cycloaliphatic radical" is defmed herein to encompass a wide range of functional groups. Examples of unsubstituted cycloaliphatic radicals include 4-allyloxycyclohexyl, aminocyclohexyl (i.e. H₂N C₆H₁₁-), aminocarbonylcyclopenyl (i.e. NH₂COC₅H₉-), 4-acetyloxycyclohexyl, dicyanoisopropylidenebis(4-cyclohexyloxy) (i.e. -OC₆H₁₁C(CN)₂C₆H₁₁O-), 3-methylcyclohexyl, methylenebis(4-cyclohexyloxy) (i.e. -OC₆H₁₁CH₂C₆H₁₁O-), ethylcyclobutyl, cyclopropylethenyl, 3-formyl-2-terahydrofuranyl, 2-hexyl-5-tetrahydrofuranyl; hexamethylene-1,6-bis(4-cyclohexyloxy) (i.e. -OC₆H₁₁(CH₂)₆ C₆H₁₁O-); 4-hydroxymethylcyclohexyl (i.e. 4-HOCH₂C₆H₁₁-), 4-mercaptomethylcyclohexyl (i.e. 4-HSCH₂C₆H₁₁-), 4-methylthiocyclohexyl (i.e. 4-CH₃SC₆H₁₁-), 4-methoxycyclohexyl, 2-methoxycarbonylcyclohexyloxy (2-CH₃OCO C₆H₁₁O-), nitromethylcyclohexyl (i.e. NO₂CH₂C₆H₁₀-), trimethylsilylcyclohexyl, t-butyldimethylsilylcyclopentyl, 4-trimethoxysilyethylcyclohexyl (e.g. (CH₃O)₃SiCH₂CH₂C₆H₁₀-), vinylcyclohexenyl, vinylidenebis(cyclohexyl), and the like. The term "a C₃-C₁₀ cycloaliphatic radical" includes substituted cycloaliphatic radicals and unsubstituted cycloaliphatic radicals containing at least three but no more than 10 carbon atoms. The cycloaliphatic radical 2-tetrahydrofuranyl (C₄H₇O-) represents a C₄ cycloaliphatic radical. The cyclohexylmethyl radical (C₆H₁₁CH₂-) represents a C₇ cycloaliphatic radical.

The term "alkyl" as used in the various embodiments of the present invention is intended to designate both linear alkyl, branched alkyl, aralkyl, cycloalkyl, bicycloalkyl, tricycloalkyl and polycycloalkyl radicals containing carbon and hydrogen atoms, and optionally containing atoms in addition to carbon and hydrogen, for example atoms selected from Groups 15, 16 and 17 of the Periodic Table. The term "alkyl" also encompasses that alkyl portion of alkoxide groups. In various embodiments normal and branched alkyl radicals are those containing from 1 to about 32 carbon atoms, and include as illustrative non-limiting examples C1-C32 alkyl optionally substituted with one or more groups selected from C1-C32 alkyl, C3-C15 cycloalkyl or aryl; and C3-C15 cycloalkyl optionally substituted with one or more groups selected from C1-C32 alkyl. Some particular illustrative examples comprise methyl, ethyl, n-propyl, isopropyl, n-butyl, sec-butyl, tertiary-butyl, pentyl, neopentyl, hexyl, heptyl, octyl, nonyl, decyl, undecyl and dodecyl. Some illustrative non-limiting examples of cycloalkyl and bicycloalkyl radicals include cyclobutyl, cyclopentyl, cyclohexyl, methylcyclohexyl, cycloheptyl, bicycloheptyl and adamantyl. In various embodiments aralkyl radicals are those containing from 7 to about 14 carbon atoms; these include, but are not limited to, benzyl, phenylbutyl, phenylpropyl, and phenylethyl. In various embodiments aryl radicals used in the various embodiments of the present invention are those substituted or unsubstituted aryl radicals containing from 6 to 18 ring carbon atoms. Some illustrative non-limiting examples of these aryl radicals include C6-C15 aryl optionally substituted with one or more groups selected from C1-C32 alkyl, C3-C15 cycloalkyl or aryl. Some particular illustrative examples of aryl radicals comprise substituted or unsubstituted phenyl, biphenyl, toluyl and naphthyl.

The invention is based on the discovery that certain disubstituted xylene glycols when used as the diol component polyesters, lead to a polyester composition having high heat and high char while not affecting the other properties of the polyester. The invention is also based on the discovery that such disubstituted xylene glycol based polyester when blended with polycarbonate provides transparent blends with high heat, and good mechanical and optical properties.

According to one embodiment of the present invention, a polyester composition derived from: (i) greater than 80 mole percent of a diol derived from a disubstituted xylene glycol of the formula (I): 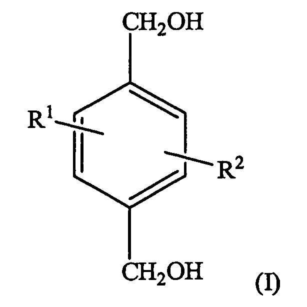 wherein R¹ and R² are independently selected from the group consisting of aliphatic radicals, aromatic radicals, cycloaliphatic radicals, sulfur containing compounds, amines and halogen; and (ii) a diacid is employed. Also disclosed are blends of these polyesters with polycarbonate.

Typically polyester resins include crystalline and amorphous polyester resins such as polyester resins derived from a disubstituted xylene glycol of formula (I) 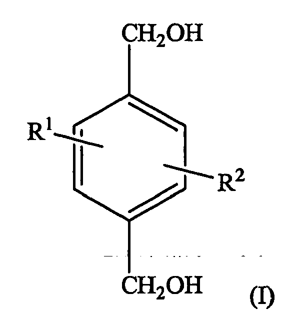 wherein R¹ and R² are independently selected from the group consisting of aliphatic radicals, aromatic radicals, cycloaliphatic radicals, sulfur containing compounds, amines and halogen, and at least one dicarboxylic acid. Preferred polyesters have repeating units according to structural formula (II) 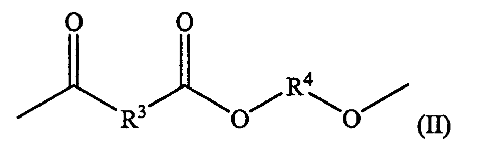 wherein, R³ is an aliphatic radicals, aromatic radicals and cycloaliphatic radical and R⁴ is the disubstituted xylene glycol of formula (I). In one embodiment, R⁴ can be a mixture of a disubstituted xylene glycol of formula (II) and an alkyl radical compromising a dehydroxylated residue derived from an aliphatic or cycloaliphatic diol, or mixtures thereof, containing from 2 to about 20 carbon atoms and R³ is an aromatic radical comprising a decarboxylated residue derived from an aromatic dicarboxylic acid. The polyester resins are typically obtained through the condensation or ester interchange polymerization of the diol or diol equivalent component with the diacid or diacid chemical equivalent component.

The diacid includes carboxylic acids having two carboxyl groups each useful in the preparation of the polyester resins of the present invention are preferably aliphatic, aromatic, cycloaliphatic. Examples of diacids are cycle or bicyclo aliphatic acids, for example, decahydro naphthalene dicarboxylic acids, stilbene dicarboxylic acid, norbornene dicarboxylic acids, bicyclo octane dicarboxylic acids, 1,4-cyclohexanedicarboxylic acid or chemical equivalents, and most preferred is trans-1,4-cyclohexanedicarboxylic acid or a chemical equivalent. Linear dicarboxylic acids like adipic acid, azelaic acid, dicarboxyl dodecanoic acid, and succinic acid may also be useful. Chemical equivalents of these diacids include esters, aliphatic esters, e.g., dialiphatic esters, diaromatic esters, anhydrides, salts, acid chlorides, acid bromides, and the like. Examples of aromatic dicarboxylic acids from which the decarboxylated residue R¹ can be derived are acids that contain a single aromatic ring per molecule such as, e.g., isophthalic or terephthalic acid, 1,2-di(p-carboxyphenyl)ethane, 4,4'-dicarboxydiphenyl ether, 4,4'- bisbenzoic acid and mixtures thereof, as well as acids contain fused rings such as, e.g. 1,4-, 1,5-, or 2,6-naphthalene dicarboxylic acids. Preferred dicarboxylic acids include terephthalic acid, isophthalic acid, stilbene dicarboxylic acids, naphthalene dicarboxylic acids, and the like, and mixtures comprising at least one of the foregoing dicarboxylic acids.

Examples of these polyvalent carboxylic acids include, but are not limited to, an aromatic polyvalent carboxylic acid, an aromatic oxycarboxylic acid, an aliphatic dicarboxylic acid, and an alicyclic dicarboxylic acid, including terephthalic acid, isophthalic acid, ortho-phthalic acid, 1,5-naphthalenedicarboxylic acid, 2,6-naphthalenedicarboxylic acid, diphenic acid, sulfoterephthalic acid, 5-sulfoisophthalic acid, 4-sulfophthalic acid, 4-sulfonaphthalene 2,7- dicarboxylic acid, 5-[4-sulfophenoxy] isophthalic acid, sulfoterephthalic acid, p-oxybenzoic acid, p-(hydroxyethoxy)benzoic acid, succinic acid, adipic acid, azelaic acid, sebacic acid, dodecanedicarboxylic acid, fumaric acid, maleic acid, itaconic acid, hexahydrophthalic acid, tetrahydrophthalic acid, trimellitic acid, trimesic acid, and pyrromellitic acid. These can be used in the form of metal salts and ammonium salts and the like.

In a more suitable embodiment, the diacid is selected from the group consisting of linear acids, terephthalic acids, isophthalic acids, phthalic acids, naphthalic acids, cycloaliphatic acids, bicyclo aliphatic acids, decahydro naphthalene dicarboxylic acids, norbornene dicarboxylic acids, bicyclo octane dicarboxylic acids, 1,4-cyclohexanedicarboxylic acid, adipic acid, azelaic acid, dicarboxyl dodecanoic acid, stilbene dicarboxylic acid, succinic acid, chemical equivalents of the foregoing, and combinations thereof. In yet another embodiment, the second diacid is selected from the group consisting of linear acids, terephthalic acids, isophthalic acids, phthalic acids, naphthalic acids, cycloaliphatic acids, bicyclo aliphatic acids, decahydro naphthalene dicarboxylic acids, norbornene dicarboxylic acids, bicyclo octane dicarboxylic acids, 1,4-cyclohexanedicarboxylic acid, adipic acid, azelaic acid, dicarboxyl dodecanoic acid, stilbene dicarboxylic acid, succinic acid, chemical equivalents of the foregoing, and combinations thereof.

The diol is a disubstituted xylene glycol of formula (I): 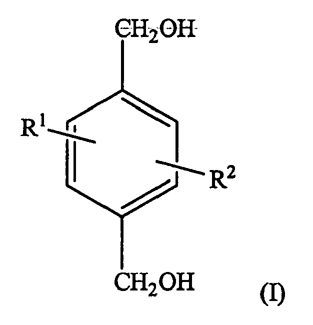 wherein R¹ and R² are independently selected from the group consisting of aliphatic radicals, aromatic radicals, cycloaliphatic radicals, sulfur containing compounds, amines and halogen. In one embodiment, the R¹ and R² are aliphatic radicals having about 1 to 20 carbon atoms. In another embodiment, the R1 and R2 are methyl groups. In yet another embodiment of the present invention, R1 and R2 can be alkoxy groups. In another embodiment, the disubstituted xylene glycol of formula (I) is present in an amount greater than 80 mole percent of the total mole percent of the diol. In another embodiment, the disubstituted xylene glycol of formula (I) is present in an amount ranging from at least 85 to 100 mole percent of the total mole percent of the diol.

In one embodiment, the disubstituted xylene glycol can further comprise disubstituted xylene glycols of the formula (III) and (IV) 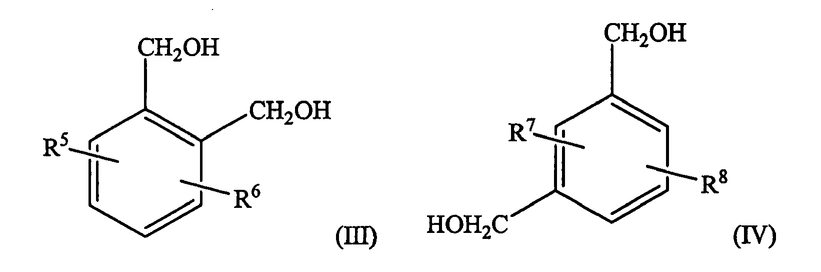 wherein R⁵, R⁶, R⁷ and R⁸ are independently selected from the group consisting of aliphatic radicals, aromatic radicals, cycloaliphatic radicals, sulfur containing compounds, amines and halogen. In one embodiment, the amount of disubstituted xylene glycol represent by formulas (III) and (IV) are present in an amount from about 0 to about 10 mole percent based on the total mole percent of the diol.

In one embodiment of the present invention, the disubstituted xylene glycol can further comprise tetrasubstituted xylene glycols of the formula (V) 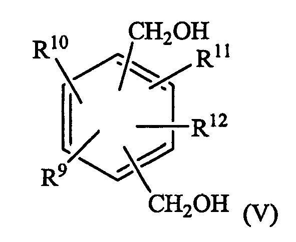 wherein R⁹, R¹⁰, R¹¹ and R¹² are independently selected from the group consisting of aliphatic radicals, aromatic radicals, cycloaliphatic radicals, sulfur containing compounds, amines and halogen

In one embodiment, the polyester can have an addition diol. The additional diol is at least one selected from the group consisting of ethylene glycol; propylene glycol, butanediol, xylene glycol and chemical equivalents of the same. Chemical equivalents to the diols include esters, such as dialkylesters, diaryl esters, and the like. In another embodiment, there can be additional diols present, which can be straight chain, branched, or cycloaliphatic diols and may contain from 2 to 12 carbon atoms. Examples of such diols include but are not limited to ethylene glycol, propylene glycol, i.e., 1, 2- and 1,3-propylene glycol, 2,2-dimethyl-1,3- propane diol 2-ethyl, 2- methyl, 1,3-propane diol, 1,3- and 1,5-pentane diol, dipropylene glycol, 2-methyl-1,5-pentane diol, 1,6-hexane diol, dimethanol decalin, dimethanol bicyclo octane, 1,4-cyclohexane dimethanol and particularly its cis- and trans-isomers, triethylene glycol, 1,10- decane diol, and mixtures of any of the foregoing. In one embodiment, the diol include glycols, such as ethylene glycol, propylene glycol, butanediol, hydroquinone, resorcinol, trimethylene glycol, 2-methyl-1,3-propane glycol, 1,4- butanediol, hexamethylene glycol, xylene glycol, decamethylene glycol, 1,4-cyclohexane dimethanol, or neopentylene glycol.

In yet another embodiment, the additional diols include polyvalent alcohols that include, but are not limited to, an aliphatic polyvalent alcohol, an alicyclic polyvalent alcohol, and an aromatic polyvalent alcohol, including ethylene glycol, propylene glycol, 1,3-propanediol, 2,3-butanediol, 1,4-butanediol, 1,5-pentanediol, 1,6- hexanediol, neopentyl glycol, diethylene glycol, dipropylene glycol, 2,2, 4-trimethyl-1, 3-pentanediol, polyethylene glycol, polypropylene glycol, polytetramethylene glycol, trimethylolethane, trimethylolpropane, glycerin, pentaerythritol, 1,4-cyclohexanediol, 1,4-cyclohexanedimethanol, spiroglycol, tricyclodecanediol, tricyclodecanedimethanol, m-xylene glycol, o-xylene glycol, p-xylene glycol, 1,4-phenylene glycol, bisphenol A, lactone polyester and polyols. The additional diol is present in an amount ranging from about 0 to about 20 mole percent based on the total mole percent of the diol.

Further, with respect to the polyester resin obtained by polymerizing the polybasic carboxylic acids and the polyhydric alcohols either singly or in combination respectively, a resin obtained by capping the polar group in the end of the polymer chain using an ordinary compound capable of capping an end can also be used.

In one embodiment of the present invention, a small amount of, e.g., up to 5 mole percent based on the acid units of a branching component containing at least three ester forming groups. The branching component can be one that provides branching in the acid unit portion of the polyester, in the glycol unit portion, or it can be a hybrid branching agent that includes both acid and alcohol functionality. Illustrative of such branching components are tricarboxylic acids, such as trimesic acid, and lower alkyl esters thereof, and the like; tetracarboxylic acids, such as pyromellitic acid, and lower alkyl esters thereof, and the like; or preferably, polyols, and especially preferably, tetrols, such as pentaerythritol; triols, such as trimethylolpropane; dihydroxy carboxylic acids; and hydroxydicarboxylic acids and derivatives, such as dimethyl hydroxyterephthalate, and the like. In addition to terephthalic acid units, small amounts, e.g., from 0.5 to 15 mole percent of other aromatic dicarboxylic acids, such as isophthalic acid or naphthalene dicarboxylic acid, or aliphatic dicarboxylic acids, such as adipic acid, can also be present, as well as a minor amount of diol component other than that derived from 1,4-butanediol, such as ethylene glycol or cyclohexylenedimethanol, etc., as well as minor amounts of trifunctional, or higher, branching components, e.g., pentaerythritol, trimethyl trimesate, and the like.

The polyesters in one embodiment of the present invention, can be a polyether ester block copolymer consisting of a thermoplastic polyester as the hard segment and a disubstituted xylene glycol as the soft segment. It may also be a three-component copolymer obtained from at least one dicarboxylic acid selected from: aromatic dicarboxylic acids such as terephthalic acid, isophthalic acid, phthalic acid, naphthalene-2,6- dicarboxylic acid, naphthalene-2,7-dicarboxylic acid, diphenyl-4,4-dicarboxylic acid, diphenoxyethanedicarboxylic acid or 3-sulfoisophthalic acid, alicyclic dicarboxylic acids such as 1,4-cyclohexanedicarboxylic acid, aliphatic dicarboxylic acids such as succinic acid, oxalic acid, adipic acid, sebacic acid, dodecanedicarboxylic acid or dimeric acid, and ester- forming derivatives thereof; at least one diol selected from: aliphatic diols such as 1,4-butanediol, ethylene glycol, trimethylene glycol, tetramethylene glycol, pentamethylene glycol, hexamethylene glycol, neopentyl glycol or decamethylene glycol, alicyclic diols such as 1,1-cyclohexanedimethanol, 1,4-cyclohexanedimethanol or tricyclodecanedimethanol, and ester-forming derivatives thereof; and at least one poly(alkylene oxide) glycol selected from: polyethylene glycol or poly(1,2- and 1,3-propylene oxide) glycol with an average molecular weight of about 400-5000, ethylene oxide-propylene oxide copolymer, and ethylene oxide-tetrahydrofuran copolymer.

In one embodiment, the polyester has an intrinsic viscosity from about 0.3 to about 1.5 deciliters per gram (dl/g) (as measured in a 60: 40, volume / volume ratio; solvent mixture of phenol/tetrachloroethane at 25°C). In another embodiment, the polyesters can be branched or unbranched and having a weight average molecular weight of at least greater than 5000 gram per mole, preferably from about 15000 to about 200000 gram per mole against polystyrene standards as measured by gel permeation chromatography using 95:5 volume by volume ratio of chloroform and hexafluoroisopropanol mixture at 25 °C. The polyester comprises different end groups. The end groups of the polyester are selected from the group consisting of acid end groups, hydroxyl end groups, vinyl end groups, ester end groups, alkyl end groups.

In one embodiment of the present invention, the polyester composition can be blended with a polycarbonate. In one embodiment, the polycarbonate is an aromatic polycarbonate. The aromatic polycarbonate resins suitable for use in the present invention, methods of making polycarbonate resins and the use of polycarbonate resins in thermoplastic molding compounds are well known in the art, see, generally, U.S. Pat. Nos. 3,169,121; 4,487,896 and 5,411,999, the respective disclosures of which are each incorporated herein by reference.

Polycarbonates useful in the invention comprise repeating units of the formula (VI) 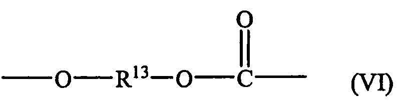 wherein R¹³ is a divalent aromatic radical derived from a dihydroxyaromatic compound of the formula HO-D-OH, wherein D has the structure of formula (VII): 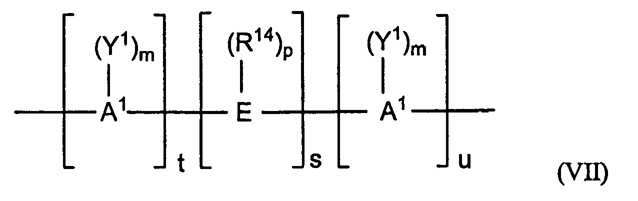 wherein A¹ represents an aromatic group including, but not limited to, phenylene, biphenylene, naphthylene, and the like. In some embodiments E may be an alkylene or alkylidene group including, but not limited to, methylene, ethylene, ethylidene, propylene, propylidene, isopropylidene, butylene, butylidene, isobutylidene, amylene, amylidene, isoamylidene, and the like. In other embodiments when E is an alkylene or alkylidene group, it may also consist of two or more alkylene or alkylidene groups connected by a moiety different from alkylene or alkylidene, including, but not limited to, an aromatic linkage; a tertiary nitrogen linkage; an ether linkage; a carbonyl linkage; a silicon-containing linkage, silane, siloxy; or a sulfur-containing linkage including, but not limited to, sulfide, sulfoxide, sulfone, and the like; or a phosphorus-containing linkage including, but not limited to, phosphinyl, phosphonyl, and the like. In other embodiments E may be a cycloaliphatic group including, but not limited to, cyclopentylidene, cyclohexylidene, 3,3,5-trimethylcyclohexylidene, methylcyclohexylidene, 2-[2.2.1]-bicycloheptylidene, neopentylidene, cyclopentadecylidene, cyclododecylidene, adamantylidene, and the like; a sulfur-containing linkage, including, but not limited to, sulfide, sulfoxide or sulfone; a phosphorus-containing linkage, including, but not limited to, phosphinyl or phosphonyl; an ether linkage; a carbonyl group; a tertiary nitrogen group; or a silicon-containing linkage including, but not limited to, silane or siloxy. R¹⁴ independently at each occurrence comprises a monovalent hydrocarbon group including, but not limited to, alkenyl, allyl, alkyl, aryl, aralkyl, alkaryl, or cycloalkyl. In various embodiments a monovalent hydrocarbon group of R¹⁴ may be halogen-substituted, particularly fluoro- or chloro-substituted, for example as in dichloroalkylidene, particularly gem-dichloroalkylidene. Y¹ independently at each occurrence may be an inorganic atom including, but not limited to, halogen (fluorine, bromine, chlorine, iodine); an inorganic group containing more than one inorganic atom including, but not limited to, nitro; an organic group including, but not limited to, a monovalent hydrocarbon group including, but not limited to, alkenyl, allyl, alkyl, aryl, aralkyl, alkaryl, or cycloalkyl, or an oxy group including, but not limited to, OR¹⁵ wherein R¹⁵ is a monovalent hydrocarbon group including, but not limited to, alkyl, aryl, aralkyl, alkaryl, or cycloalkyl; it being only necessary that Y¹ be inert to and unaffected by the reactants and reaction conditions used to prepare the polymer. In some particular embodiments Y¹ comprises a halo group or C₁-C₆ alkyl group. The letter "m" represents any integer from and including zero through the number of replaceable hydrogens on A¹ available for substitution; "p" represents an integer from and including zero through the number of replaceable hydrogens on E available for substitution; "t" represents an integer equal to at least one; "s" represents an integer equal to either zero or one; and "u" represents any integer including zero.

In dihydroxy-substituted aromatic hydrocarbons in which D is represented by formula (VII) above, when more than one Y¹ substituent is present, they may be the same or different. The same holds true for the R¹⁴ substituent. Where "s" is zero in formula (VII) and "u" is not zero, the aromatic rings are directly joined by a covalent bond with no intervening alkylidene or other bridge. The positions of the hydroxyl groups and Y¹ on the aromatic nuclear residues A¹ can be varied in the ortho, meta, or para positions and the groupings can be in vicinal, asymmetrical or symmetrical relationship, where two or more ring carbon atoms of the hydrocarbon residue are substituted with Y¹ and hydroxyl groups. In some particular embodiments the parameters "t," "s," and "u" each have the value of one; both A¹ radicals are unsubstituted phenylene radicals; and E is an alkylidene group such as isopropylidene. In some particular embodiments both A¹ radicals are p-phenylene, although both may be o- or m-phenylene or one o- or m-phenylene and the other p-phenylene.

In some embodiments of dihydroxy-substituted aromatic hydrocarbons E may be an unsaturated alkylidene group. Suitable dihydroxy-substituted aromatic hydrocarbons of this type include those of the formula (VIII): 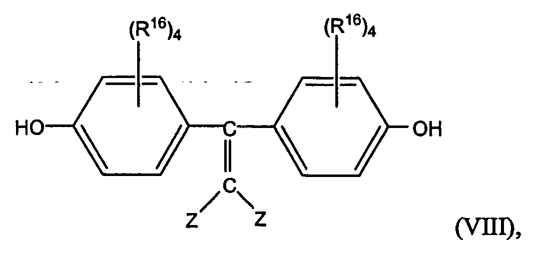 where independently each R¹⁶ is hydrogen, chlorine, bromine or a C₁₋₃₀ monovalent hydrocarbon or hydrocarbonoxy group, each Z is hydrogen, chlorine or bromine, subject to the provision that at least one Z is chlorine or bromine.

Suitable dihydroxy-substituted aromatic hydrocarbons also include those of the formula (IX): 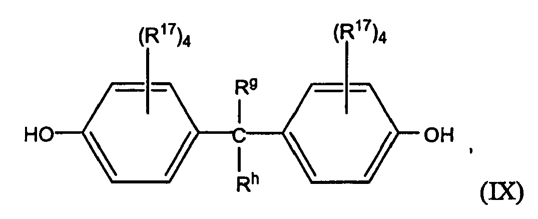 where independently each R¹⁷ is as defined hereinbefore, and independently R^{g} and R^{h} are hydrogen or a C1-30 hydrocarbon group.

In some embodiments of the present invention, dihydroxy-substituted aromatic hydrocarbons that may be used comprise those disclosed by name or formula (generic or specific) in U.S. Pat. Nos. 2,991,273, 2,999,835, 3,028,365, 3,148,172, 3,153,008, 3,271,367, 3,271,368, and 4,217,438. In other embodiments of the invention, dihydroxy-substituted aromatic hydrocarbons comprise bis(4-hydroxyphenyl)sulfide, bis(4-hydroxyphenyl) ether, bis(4-hydroxyphenyl)sulfone, bis(4-hydroxyphenyl)sulfoxide, 1,4-dihydroxybenzene, 4,4'-oxydiphenol, 2,2-bis(4-hydroxyphenyl)hexafluoropropane, 4,4'-(3,3,5-trimethylcyclohexylidene)diphenol; 4,4'-bis(3,5-dimethyl)diphenol, 1,1-bis(4-hydroxy-3-methylphenyl)cyclohexane; 4,4-bis(4-hydroxyphenyl)heptane; 2,4'-dihydroxydiphenylmethane; bis(2-hydroxyphenyl)methane; bis(4-hydroxyphenyl)methane; bis(4-hydroxy-5-nitrophenyl)methane; bis(4-hydroxy-2,6-dimethyl-3-methoxyphenyl)methane; 1,1-bis(4-hydroxyphenyl)ethane; 1,2-bis(4-hydroxyphenyl)ethane; 1,1-bis(4-hydroxy-2-chlorophenyl)ethane; 2,2-bis(3-phenyl-4-hydroxyphenyl)propane; 2,2-bis(4-hydroxy-3-methylphenyl)propane; 2,2-bis(4-hydroxy-3-ethylphenyl)propane; 2,2-bis(4-hydroxy-3-isopropylphenyl)propane; 2,2-bis(4-hydroxy-3,5-dimethylphenyl)propane; 3,5,3',5'-tetrachloro-4,4'-dihydroxyphenyl)propane; bis(4-hydroxyphenyl)cyclohexylmethane; 2,2-bis(4-hydroxyphenyl)-1-phenylpropane; 2,4'-dihydroxyphenyl sulfone; dihydroxy naphthalene; 2,6-dihydroxy naphthalene; hydroquinone; resorcinol; C1-3 alkyl-substituted resorcinols; methyl resorcinol, catechol, 1,4-dihydroxy-3-methylbenzene; 2,2-bis(4-hydroxyphenyl)butane; 2,2-bis(4-hydroxyphenyl)-2-methylbutane; 1,1-bis(4-hydroxyphenyl)cyclohexane; 4,4'-dihydroxydiphenyl; 2-(3-methyl-4-hydroxyphenyl-2-(4-hydroxyphenyl)propane; 2-(3,5-dimethyl-4-hydroxyphenyl)-2-(4-hydroxyphenyl)propane; 2-(3-methyl-4-hydroxyphenyl)-2-(3,5-dimethyl-4-hydroxyphenyl)propane; bis(3,5-dimethylphenyl-4-hydroxyphenyl)methane; 1,1-bis(3,5-dimethylphenyl-4-hydroxyphenyl)ethane; 2,2-bis(3,5-dimethylphenyl-4-hydroxyphenyl)propane; 2,4-bis(3,5-dimethylphenyl-4-hydroxyphenyl)-2-methylbutane; 3,3-bis(3,5-dimethylphenyl-4-hydroxyphenyl)pentane; 1,1-bis(3,5-dimethylphenyl-4-hydroxyphenyl)cyclopentane; 1,1-bis(3,5-dimethylphenyl-4-hydroxyphenyl)cyclohexane; bis(3,5-dimethyl-4-hydroxyphenyl) sulfoxide, bis(3,5-dimethyl-4-hydroxyphenyl) sulfone and bis(3,5-dimethylphenyl-4-hydroxyphenyl)sulfide. In a particular embodiment the dihydroxy-substituted aromatic hydrocarbon comprises bisphenol A.

In some embodiments of dihydroxy-substituted aromatic hydrocarbons when E is an alkylene or alkylidene group, said group may be part of one or more fused rings attached to one or more aromatic groups bearing one hydroxy substituent. Suitable dihydroxy-substituted aromatic hydrocarbons of this type include those containing indane structural units such as represented by the formula (X), which compound is 3-(4-hydroxyphenyl)-1,1,3-trimethylindan-5-ol, and by the formula (XI), which compound is 1-(4-hydroxyphenyl)-1,3,3-trimethylindan-5-ol:

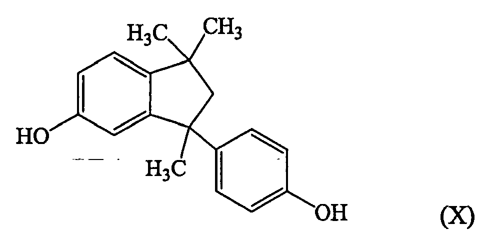

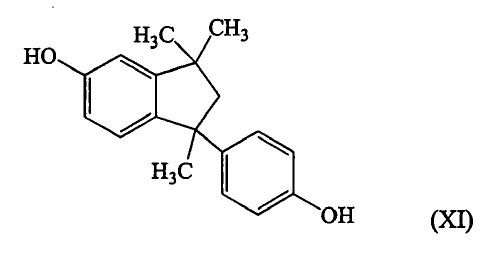

Also included among suitable dihydroxy-substituted aromatic hydrocarbons of the type comprising one or more alkylene or alkylidene groups as part of fused rings are the 2,2,2',2'-tetrahydro-1,1'-spirobi[1H-indene]diols having formula (XII): 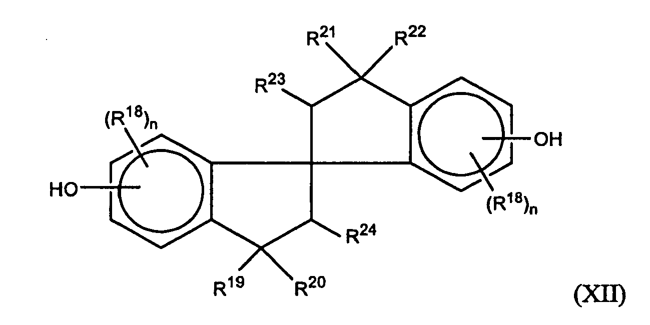 wherein each R¹⁸ is independently selected from monovalent hydrocarbon radicals and halogen radicals; each R¹⁹, R²⁰, R²¹, and R²² is independently C1-6 alkyl; each R²³ and R²⁴ is independently H or C1-6 alkyl; and each n is independently selected from positive integers having a value of from 0 to 3 inclusive. In a particular embodiment the 2,2,2',2'-tetrahydro-1,1'-spirobi[1H-indene]diol is 2,2,2',2'-tetrahydro-3,3,3',3'-tetramethyl-1,1'-spirobi[1H-indene]-6,6'-diol (sometimes known as "SBI"). Mixtures of alkali metal salts derived from mixtures of any of the foregoing dihydroxy-substituted aromatic hydrocarbons may also be employed.

Mixtures comprising two or more hydroxy-substituted hydrocarbons may also be employed. In some particular embodiments mixtures of at least two monohydroxy-substituted alkyl hydrocarbons, or mixtures of at least one monohydroxy-substituted alkyl hydrocarbon and at least one dihydroxy-substituted alkyl hydrocarbon, or mixtures of at least two dihydroxy-substituted alkyl hydrocarbons, or mixtures of at least two monohydroxy-substituted aromatic hydrocarbons, or mixtures of at least two dihydroxy-substituted aromatic hydrocarbons, or mixtures of at least one monohydroxy-substituted aromatic hydrocarbon and at least one dihydroxy-substituted aromatic hydrocarbon, or mixtures of at least one monohydroxy-substituted alkyl hydrocarbon and at least one dihydroxy-substituted aromatic hydrocarbon may be employed.

In yet another embodiment, the polycarbonate resin is a linear polycarbonate resin that is derived from bisphenol A and phosgene. In an alternative embodiment, the polycarbonate resin is a blend of two or more polycarbonate resins.

The copolycarbonate may be prepared in the melt, in solution, or by interfacial polymerization techniques well known in the art. For example, the aromatic polycarbonates can be made by reacting bisphenol-A with phosgene, dibutyl carbonate or diphenyl carbonate. Such aromatic polycarbonates are also commercially available. In one embodiment, the aromatic polycarbonate resins are commercially available from General Electric Company, e.g., LEXAN™ bisphenol A-type polycarbonate resins.

The preferred polycarbonates are preferably high molecular weight aromatic carbonate polymers have an intrinsic viscosity (as measured in methylene chloride at 25°C) ranging from about 0.30 to about 1.00 deciliters per gram. Polycarbonates may be branched or unbranched and generally will have a weight average molecular weight of from about 10,000 to about 200,000, preferably from about 20,000 to about 100,000 as measured by gel permeation chromatography. It is contemplated that the polycarbonate may have various known end groups.

In one embodiment, the polycarbonate is present in an amount from about 0 to 90 weight percent based on the total weight of the composition. In another embodiment the polycarbonate is present in an amount from about 0 to 85 weight percent based on the total weight of the composition. In one embodiment, the polyester is present in an amount from about 5 to 95 weight percent based on the total weight of the blend composition. In another embodiment the polyester is present in an amount from about 10 to 90 weight percent based on the total weight of the blend composition.

The polymer composition may further contain a filler, including the fillers and solid compounding ingredients or agents commonly used in polymeric compositions. The filler is added in an amount such that the balance combination of the mechanical properties is not affected. The filler can be selected from the group consisting of calcium carbonate, mica, kaolin, talc, glass fibers, carbon fibers, carbon nanotubes, magnesium carbonate, sulfates of barium, calcium sulfate, titanium, nano clay, carbon black, silica, treated clays, e.g., silane-treated clays, hydroxides of aluminum or ammonium or magnesium, zirconia, nanoscale titania, or a combination thereof.

One useful class of fillers is the particulate fillers, which can be of any configuration, for example spheres, plates, fibers, acicular, flakes, whiskers, or irregular shapes. Suitable fillers typically have an average longest dimension of about 1 nanometer to about 500 micrometers, specifically about 10 nanometers to about 100 micrometers. The average aspect ratio (length:diameter) of some fibrous, acicular, or whisker-shaped fillers (e.g., glass or wollastonite) can be about 1.5 to about 1000, although longer fibers are also within the scope of the invention. The mean aspect ratio (mean diameter of a circle of the same area: mean thickness) of plate-like fillers (e.g., mica, talc, or kaolin) can be greater than about 5, specifically about 10 to about 1000, more specifically about 10 to about 200. Bimodal, trimodal, or higher mixtures of aspect ratios may also be used.

The fillers can be of natural or synthetic, mineral or non-mineral origin, provided that the fillers have sufficient thermal resistance to maintain their solid physical structure at least at the processing temperature of the composition with which it is combined. Suitable fillers include clays, nanoclays, carbon black, wood flour either with or without oil, various forms of silica (precipitated or hydrated, fumed or pyrogenic, vitreous, fused or colloidal, including common sand), glass, metals, inorganic oxides (such as oxides of the metals in Periods 2, 3, 4, 5 and 6 of Groups Ib, IIb, IIIa, IIIb, IVa, IVb (except carbon), Va, VIa, VIIa and VIII of the Periodic Table), oxides of metals (such as aluminum oxide, titanium oxide, zirconium oxide, titanium dioxide, nanoscale titanium oxide, aluminum trihydrate, vanadium oxide, and magnesium oxide), hydroxides of aluminum or ammonium or magnesium, carbonates of alkali and alkaline earth metals (such as calcium carbonate, barium carbonate, and magnesium carbonate), antimony trioxide, calcium silicate, diatomaceous earth, fuller earth, kieselguhr, mica, talc, slate flour, volcanic ash, cotton flock, asbestos, kaolin, alkali and alkaline earth metal sulfates (such as sulfates of barium and calcium sulfate), titanium, zeolites, wollastonite, titanium boride, zinc borate, tungsten carbide, ferrites, molybdenum disulfide, asbestos, cristobalite, aluminosilicates including Vermiculite, Bentonite, montmorillonite, Namontmorillonite, Ca-montmorillonite, hydrated sodium calcium aluminum magnesium silicate hydroxide, pyrophyllite, magnesium aluminum silicates, lithium aluminum silicates, zirconium silicates, and combinations comprising at least one of the foregoing fillers. Suitable fibrous fillers include glass fibers, basalt fibers, aramid fibers, carbon fibers, carbon nanofibers, carbon nanotubes, carbon buckyballs, ultra high molecular weight polyethylene fibers, melamine fibers, polyamide fibers, cellulose fiber, metal fibers, potassium titanate whiskers, and aluminum borate whiskers.

Of these, calcium carbonate, talc, glass fibers, carbon fibers, magnesium carbonate, mica, silicon carbide, kaolin, wollastonite, calcium sulfate, barium sulfate, titanium, silica, carbon black, ammonium hydroxide, magnesium hydroxide, aluminum hydroxide, and combinations comprising at least one of the foregoing are useful. It has been found that mica, talc, silicon carbide, and combinations comprising at least one of the foregoing fillers are of specific utility.

Alternatively, or in addition to a particulate filler, the filler can be provided in the form of monofilament or multifilament fibers and can be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

Optionally, the fillers can be surface modified, for example treated so as to improve the compatibility of the filler and the polymeric portions of the compositions, which facilitates deagglomeration and the uniform distribution of fillers into the polymers. One suitable surface modification is the durable attachment of a coupling agent that subsequently bonds to the polymers. Use of suitable coupling agents may also improve impact, tensile, flexural, and/or dielectric properties in plastics and elastomers; film integrity, substrate adhesion, weathering and service life in coatings; and application and tooling properties, substrate adhesion, cohesive strength, and service life in adhesives and sealants. Suitable coupling agents include silanes, titanates, zirconates, zircoaluminates, carboxylated polyolefins, chromates, chlorinated paraffins, organosilicon compounds, and reactive cellulosics. The fillers may also be partially or entirely coated with a layer of metallic material to facilitate conductivity, e.g., gold, copper, silver, and the like.

In a preferred embodiment, the reinforcing filler comprises glass fibers. For compositions ultimately employed for electrical uses, it is preferred to use fibrous glass fibers comprising lime-aluminum borosilicate glass that is relatively soda free, commonly known as "E" glass. However, other glasses are useful where electrical properties are not so important, e.g., the low soda glass commonly known as "C" glass. The glass fibers can be made by standard processes, such as by steam or air blowing, flame blowing and mechanical pulling. Preferred glass fibers for plastic reinforcement can be made by mechanical pulling. The diameter of the glass fibers is generally about 1 to about 50 micrometers, preferably about 1 to about 20 micrometers. Smaller diameter fibers are generally more expensive, and glass fibers having diameters of about 10 to about 20 micrometers presently offer a desirable balance of cost and performance. The glass fibers can be bundled into fibers and the fibers bundled in turn to yarns, ropes or rovings, or woven into mats, and the like, as is required by the particular end use of the composition. In preparing the molding compositions, it is convenient to use the filamentous glass in the form of chopped strands of about one-eighth to about 2 inches long, which usually results in filament lengths between about 0.0005 to about 0. 25 inch in the molded compounds. Such glass fibers are normally supplied by the manufacturers with a surface treatment compatible with the polymer component of the composition, such as a siloxane, titanate, or polyurethane sizing, or the like.

When present in the composition, the filler can be used from 0 to about 40 weight percent, based on the total weight of the composition. Within this range, it is preferred to use at least about 25 weight percent of the reinforcing filler. Also within this range, it is preferred to use up to about 10 weight percent of the filler.

Optionally, the polymer composition may further contain one or more additives ordinarily incorporated in resin compositions of this type, preferably with the proviso that the additive(s)s are selected so as to not significantly adversely affect the desired properties of the thermoplastic composition but enhance other favorable properties. Mixtures of additives can be used. Such additives can be mixed at a suitable time during the mixing of the components for forming the composition. Exemplary additives include extenders, lubricants, flow modifiers, fire retardants, pigments, dyes, colorants, UV light stabilizers, anti-oxidants, impact modifiers, heat stabilizers, antidrip agents, plasticizers, mold release agents, nucleating agents, optical brighteners, flame proofing agents, anti-static agents, blowing agents, and the like. The additive is present ranging from 0 to 20 weight percent, based on the total weight of composition.

Flame-retardant additives are desirably present in an amount at least sufficient to reduce the flammability of the polyester resin, preferably to a UL94 V-0 rating. The amount will vary with the nature of the resin and with the efficiency of the additive. In general, however, the amount of additive will be from 0 to 20 percent by weight based on the weight of resin.

Typically, halogenated aromatic flame-retardants include tetrabromobisphenol a polycarbonate oligomer, polybromophenyl ether, brominated polystyrene, brominated BPA polyepoxide, brominated imides, brominated polycarbonate, poly (haloaryl acrylate), poly (haloaryl methacrylate), or mixtures thereof. Examples of other suitable flame retardants are brominated polystyrenes such as polydibromostyrene and polytribromostyrene, decabromobiphenyl ethane, tetrabromobiphenyl, brominated alpha, omega -alkylene-bis-phthalimides, e.g. N,N-ethylene-bis-tetrabromophthalimide, oligomeric brominated carbonates, especially carbonates derived from tetrabromobisphenol A, which, if desired, are end-capped with phenoxy radicals, or with brominated phenoxy radicals, or brominated epoxy resins.

Alternatively, the thermoplastic composition can be essentially free of chlorine and bromine. Essentially free of chlorine and bromine as used herein refers to materials produced without the intentional addition of chlorine or bromine or chlorine or bromine containing materials. It is understood however that in facilities that process multiple products a certain amount of cross contamination can occur resulting in bromine and/or chlorine levels typically on the parts per million by weight scale. With this understanding it can be readily appreciated that essentially free of bromine and chlorine can be defined as having a bromine and/or chlorine content of less than about 100 parts per million by weight (ppm), less than about 75 ppm, or less than about 50 ppm. When this definition is applied to the fire retardant it is based on the total weight of the fire retardant. When this definition is applied to the thermoplastic composition it is based on the total weight of the polymer portion of the composition and fire retardant.

The flame retardants are typically used with a synergist, particularly inorganic antimony compounds. Such compounds are widely available or can be made in known ways. Typical, inorganic synergist compounds include Sb₂O₅, SbS₃, sodium antimonate and the like. Especially preferred is antimony trioxide (Sb₂O₃). Synergists such as antimony oxides, are typically used at about 0.1 to 10 by weight based on the weight percent of resin in the final composition. Also, the fmal composition may contain polytetrafluoroethylene (PTFE) type resins or copolymers used to reduce dripping in flame retardant thermoplastics. Also, other halogen-free flame retardants than the mentioned P or N containing compounds can be used, non limiting examples being compounds as Zn-borates, hydroxides or carbonates as Mg- and/or Al-hydroxides or carbonates, Si-based compounds like silanes or siloxanes, Sulfur based compounds as aryl sulphonates (including salts of it) or sulphoxides, Sn-compounds as stannates can be used as well often in combination with one or more of the other possible flame retardants.

Neutralizing additives can be for example, melamine, polyvinylpyrrolidone, dicyandiamide, triallyl cyanurate, urea derivatives, hydrazine derivatives, amines, polyamides, and polyurethanes; alkali metal salts and alkaline earth metal salts of higher fatty acids, such as for example, calcium stearate, calcium stearoyl lactate, calcium lactate, zinc stearate, magnesium stearate, sodium ricinoleate, and potassium palmitate; antimony pyrocatecholate, zinc pyrocatecholate, and hydrotalcites and synthetic hydrotalcites. Hydroxy carbonates, magnesium zinc hydroxycarbonates, magnesium aluminum hydroxycarbonates, and aluminum zinc hydroxycarbonates; as well as metal oxides, such as zinc oxide, magnesium oxide and calcium oxide; peroxide scavengers, such as, e.g., (C10 - C20) alkyl esters of beta-thiodipropionic acid, such as for example the lauryl, stearyl, myristyl or tridecyl esters; mercapto benzimidazole or the zinc salt of 2-mercaptobenzimidazole, zinc-dibutyldithiocarbamate, dioctadecyldisulfide, and pentaerythritol tetrakis(.beta.-dodecylmercapto)propionate may also be used. When present, the neutralizing additives can be used in amounts of about 5 to about 50 parts by weight, more specifically about 10 to about 40 parts by weight, based on 100 parts by weight of the polymer portion of the composition.

In yet another embodiment, the optional additive is a polyamide stabilizer, such as, copper salts in combination with iodides and/or phosphorus compounds and salts of divalent manganese. Examples of sterically hindered amines include but are not restricted to triisopropanol amine or the reaction product of 2,4-dichloro-6-(4-morpholinyl)-1,3,5- triazine with a polymer of 1,6-diamine, N,N'-Bis(-2,2,4,6-tetramethyl-4- piperidinyl) hexane.

Other additional ingredients may include antioxidants, and UV absorbers, and other stabilizers. Antioxidants include i) alkylated monophenols, for example: 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(alpha-methylcyclohexyl)-4,6 dimethylphenol, 2,6-di-octadecyl-4-methylphenol, 2,4,6,-tricyclohexyphenol, 2,6-di-tert-butyl-4-methoxymethylphenol; ii) alkylated hydroquinones, for example, 2,6-di-tert-butyl-4-methoxyphenol, 2,5-di-tert-butyl-hydroquinone, 2,5-di-tert-amyl-hydroquinone, 2,6-diphenyl-4octadecyloxyphenol; iii) hydroxylated thiodiphenyl ethers; iv) alkylidene-bisphenols; v) benzyl compounds, for example, 1,3,5-tris-(3,5-di-tert-butyl-4-hydroxybenzyl)-2,4,6-trimethylbenzene; vi) acylaminophenols, for example, 4-hydroxy-lauric acid anilide; vii) esters of beta-(3,5-di-tert-butyl-4-hydroxyphenol)-propionic acid with monohydric or polyhydric alcohols; viii) esters of beta-(5-tert-butyl-4-hydroxy-3-methylphenyl)-propionic acid with monohydric or polyhydric alcohols; vii) esters of beta-(5-tert-butyl-4-hydroxy-3-methylphenyl) propionic acid with mono-or polyhydric alcohols, e.g., with methanol, diethylene glycol, octadecanol, triethylene glycol, 1,6-hexanediol, pentaerythritol, neopentyl glycol, tris(hydroxyethyl) isocyanurate, thiodiethylene glycol, N,N-bis(hydroxyethyl) oxalic acid diamide. Typical, UV absorbers and light stabilizers include i) 2-(2'-hydroxyphenyl)-benzotriazoles, for example, the 5'methyl-,3'5'-di-tert-butyl-,5'-tert-butyl-,5'(1,1,3,3-tetramethylbutyl)-,5-chloro-3',5'-di-tert-butyl-,5-chloro-3'tert-butyl-5'methyl-,3'sec-butyl-5'tert-butyl-,4'-octoxy,3',5'-ditert-amyl-3',5'-bis-(alpha, alphadimethylbenzyl)-derivatives; ii) 2.2 2-Hydroxy-benzophenones, for example, the 4-hydroxy-4-methoxy-,4-octoxy,4-decloxy-,4-dodecyloxy-,4-benzyloxy,4,2',4'-trihydroxy-and 2'hydroxy-4,4'-dimethoxy derivative, and iii) esters of substituted and unsubstituted benzoic acids for example, phenyl salicylate, 4-tert-butylphenyl-salicilate, octylphenyl salicylate, dibenzoylresorcinol, bis(4-tert-butylbenzoyl)-resorcinol, benzoylresorcinol, 2,4-di-tert-butyl-phenyl-3,5-di-tert-butyl-4-hydroxybenzoate and hexadecyl-3,5-di-tert-butyl-4-hydroxybenzoate.

The composition can further comprise one or more anti- dripping agents, which prevent or retard the resin from dripping while the resin is subjected to burning conditions. Specific examples of such agents include silicone oils, silica (which also serves as a reinforcing filler), asbestos, and fibrillating-type fluorine-containing polymers. Examples of fluorine-containing polymers include fluorinated polyolefins such as, for example, poly(tetrafluoroethylene), tetrafluoroethylene/hexafluoropropylene copolymers, tetrafluoroethylene/ethylene copolymers, polyvinylidene fluoride, poly(chlorotrifluoroethylene), and the like, and mixtures comprising at least one of the foregoing anti-dripping agents. A preferred anti- dripping agent is poly(tetrafluroethylene). When used, an anti-dripping agent is present in an amount of about 0.02 to about 2 weight percent, and more preferably from about 0.05 to about 1 weight percent, based on the total weight of the composition.

Plasticizers, lubricants, and/or mold release agents additives may also be used. There is considerable overlap among these types of materials, which include, for example, phthalic acid esters; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; sodium, calcium or magnesium salts of fatty acids such as lauric acid, palmitic acid, oleic acid or stearic acid; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax, EBS wax, or the like. Such materials are generally used in amounts of about 0.1 to about 20 parts by weight, based on 100 parts by weight of the polymer portion of the composition.

The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example Pelestat 6321 (Sanyo) or Pebax MH1657 (Atofina), Irgastat P18 and P22 (Ciba-Geigy). Other polymeric materials that can be used as antistatic agents are inherently conducting polymers such as polyaniline (commercially available as PANIPOL®EB from Panipol), polypyrrole and polythiophene (commercially available from Bayer), which retain some of their intrinsic conductivity after melt processing at elevated temperatures. In one embodiment, carbon fibers, carbon nanofibers, carbon nanotubes, carbon black, or any combination of the foregoing can be used in a polymeric resin containing chemical antistatic agents to render the composition electrostatically dissipative. Antistatic agents are generally used in amounts of about 0.05 to about 20 parts by weight, based on 100 parts by weight of the polymer portion of the composition.

Dyes or pigments can be used to give a background coloration. Dyes are typically organic materials that are soluble in the resin matrix while pigments can be organic complexes or even inorganic compounds or complexes, which are typically insoluble in the resin matrix. These organic dyes and pigments include the following classes and "examples: furnace carbon black, titanium oxide, zinc sulfide, phthalocyanine blues or greens, anthraquinone dyes, scarlet 3b Lake, azo compounds and acid azo pigments, quinacridones, chromophthalocyanine pyrrols, halogenated phthalocyanines, quinolines, heterocyclic dyes, perinone dyes, anthracenedione dyes, thioxanthene dyes, parazolone dyes, polymethine pigments and others.

Colorants such as pigment and/or dye additives may also be present. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates sulfates, chromates, or the like; carbon blacks; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, or combinations comprising at least one of the foregoing pigments. Pigments are generally used in amounts of about 0.1 to about 20 parts by weight, based on 100 parts by weight of the polymer portion of the composition.

Suitable dyes are generally organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes. Dyes are generally used in amounts of about 0.01 to about 20 parts by weight, based on 100 parts by weight of the polymer portion of the composition.

Where a foam is desired, suitable blowing agents include for example, low boiling halohydrocarbons and those that generate carbon dioxide; blowing agents that are solid at room temperature and when heated to temperatures higher than their decomposition temperature, generate gases such as nitrogen, carbon 25 dioxide ammonia gas, such as azodicarbonamide, metal salts of azodicarbonamide, 4,4' oxybis(benzenesulfonylhydrazide), sodium bicarbonate, ammonium carbonate, or the like, or combinations comprising at least one of the foregoing blowing agents. Blowing agents are generally used in amounts of about 0.01 to about 15 parts by weight, based on 100 parts by weight of the polymer portion of the composition.

The composition can optionally comprise an impact modifier. Impact modifiers, as used herein, include materials effective to improve the impact properties of polyesters.

Useful impact modifiers are substantially amorphous copolymer resins, including but not limited to acrylic rubbers, ASA rubbers, diene rubbers, organosiloxane rubbers, EPDM rubbers, SBS or SEBS rubbers, ABS rubbers, MBS rubbers and glycidyl ester impact modifiers.

The acrylic rubber is preferably core-shell polymers built up from a rubber-like core on which one or more shells have been grafted. Typical core material consists substantially of an acrylate rubber. Preferable the core is an acrylate rubber of derived from a C4 to C12 acrylate. Typically, one or more shells are grafted on the core. Usually these shells are built up for the greater part from a vinyl aromatic compound and/or a vinyl cyanide and/or an alkyl(meth)acrylate and/or (meth)acrylic acid. Preferable the shell is derived from an alkyl(meth)acrylate, more preferable a methyl(meth)acrylate. The core and/or the shell(s) often comprise multi-functional compounds that may act as a cross-linking agent and/or as a grafting agent. These polymers are usually prepared in several stages. The preparation of core-shell polymers and their use as impact modifiers are described in U.S. Pat. Nos. 3,864,428 and 4,264,487. Especially preferred grafted polymers are the core-shell polymers available from Rohm & Haas under the trade name PARALOID®, including, for example, PARALOID®. EXL3691 and PARALOID® EXL3330, EXL3300 and EXL2300. Core shell acrylic rubbers can be of various particle sizes. The preferred range is from 300-800 nm, however larger particles, or mixtures of small and large particles, may also be used. In some instances, especially where good appearance is required acrylic rubber with a particle size of 350-450 nm may be preferred. In other applications where higher impact is desired acrylic rubber particle sizes of 450-550 nm or 650-750 nm may be employed.

Acrylic impact modifiers contribute to heat stability and UV resistance as well as impact strength of polymer compositions. Other preferred rubbers useful herein as impact modifiers include graft and/or core shell structures having a rubbery component with a Tg (glass transition temperature) below 0° C., preferably between about -40° to about -80° C., which comprise poly-alkylacrylates or polyolefins grafted with poly(methyl)methacrylate or styrene-acrylonitrile copolymer. Preferably the rubber content is at least about 10 % by weight, most preferably, at least about 50%.

Typical other rubbers for use as impact modifiers herein are the butadiene core-shell polymers of the type available from Rohm & Haas under the trade name PARALOID® EXL2600. Most preferably, the impact modifier will comprise a two stage polymer having a butadiene based rubbery core, and a second stage polymerized from methylmethacrylate alone or in combination with styrene. Impact modifiers of the type also include those that comprise acrylonitrile and styrene grafted onto cross- linked butadiene polymer, which are disclosed in U.S. Pat. No. 4,292,233 herein incorporated by reference.

Other suitable impact modifiers may be mixtures comprising core shell impact modifiers made via emulsion polymerization using alkyl acrylate, styrene and butadiene. These include, for example, methylmethacrylate- butadiene-styrene (MBS) and methylmethacrylate-butylacrylate core shell rubbers.

Among the other suitable impact modifiers are the so-called block copolymers and rubbery impact modifiers, for example, A--B--A triblock copolymers and A--B diblock copolymers. The A--B and A--B--A type block copolymer rubber additives which may be used as impact modifiers include thermoplastic rubbers comprised of one or two alkenyl aromatic blocks which are typically styrene blocks and a rubber block, e.g., a butadiene block which may be partially hydrogenated. Mixtures of these triblock copolymers and diblock copolymers are especially useful.

Suitable A--B and A--B--A type block copolymers are disclosed in, for example, U.S. Pat. Nos. 3,078,254, 3,402,159, 3,297,793, 3,265,765, and 3, 594,452 and U.K. Patent 1,264,741. Examples of typical species of A--B and A--B--A block copolymers include polystyrene-polybutadiene (SB), polystyrene-poly(ethylenepropylene), polystyrene-polyisoprene, poly(α-methylstyrene)-polybutadiene, polystyrene-polybutadiene-polystyrene (SBS), polystyrene-poly(ethylene-propylene)-polystyrene, polystyrene- polyisoprene-polystyrene and poly(α-methylstyrene)-polybutadiene- poly(α-methylstyrene), as well as the selectively hydrogenated versions thereof, and the like. Mixtures comprising at least one of the aforementioned block copolymers are also useful. Such A--B and A--B--A block copolymers are available commercially from a number of sources, including Phillips Petroleum under the trademark SOLPRENE, Shell Chemical Co., under the trademark KRATON, Dexco under the trade name VECTOR, and Kuraray under the trademark SEPTON.

The composition can also comprise a vinyl aromatic-vinyl cyanide copolymer. Suitable vinyl cyanide compounds include acrylonitrile and substituted vinyl cyanides such a methacrylonitrile. Preferably, the impact modifier comprises styrene-acrylonitrile copolymer (hereinafter SAN). The preferred SAN composition comprises at least 10, preferably 25 to 28, percent by weight acrylonitrile (AN) with the remainder styrene, para-methyl styrene, or alpha methyl styrene. Another example of SANs useful herein include those modified by grafting SAN to a rubbery substrate such as, for example, 1,4-polybutadiene, to produce a rubber graft polymeric impact modifier. High rubber content (greater than 50 % by weight) resin of this type (HRG-ABS) may be especially useful for impact modification of polyester resins and their polycarbonate blends.

Another class of preferred impact modifiers, referred to as high rubber graft ABS modifiers, comprise greater than or equal to about 90 % by weight SAN grafted onto polybutadiene, the remainder being free SAN. ABS can have butadiene contents between 12% and 85% by weight and styrene to acrylonitrile ratios between 90:10 and 60:40. Preferred compositions include: about 8% acrylonitrile, 43% butadiene and 49% styrene, and about 7% acrylonitrile, 50% butadiene and 43% styrene, by weight. These materials are commercially available under the trade names BLENDEX 336 and BLENDEX 415 respectively (Crompton Co.).

In one embodiment of the present invention, the additive may further comprise a monofunctional or a polyfunctional carboxy-reactive material that can be either polymeric or non-polymeric. The functional group is selected from the group consisting of epoxy molecules, carbodiimides, orthoesters, aziridines, oxiranes, anhydrides, oxazolines, imidazolines, isocyanates and combinations thereof. The carboxy reactive compound is selected from the group consisting of mono epoxy silanes, mono, di or poly epoxy molecules, carbodiimides, orthoesters, anhydrides, oxazolines, imidazolines, isocyanates and combinations thereof. Non-limiting examples of reactive moieties include reactive silicon-containing materials, for example epoxy modified silicone and silane monomers and polymers.

The term "polyfunctional" or "multifunctional" in connection with the carboxy-reactive material means that at least two carboxy-reactive groups are present in each molecule of the material. Particularly useful polyfunctional carboxy-reactive materials include materials with at least two reactive epoxy groups. The polyfunctional epoxy material can contain aromatic and/or aliphatic residues. Examples include epoxy novolac resins, epoxidized vegetable (e.g., soybean, linseed) oils, tetraphenylethylene epoxide, styrene-acrylic copolymers containing pendant glycidyl groups, glycidyl methacrylate-containing polymers and copolymers, and difunctional epoxy compounds such as 3,4-epoxycyclohexylmethyl-3,4-epoxycyclohexanecarboxylate. In one embodiment, the polyfunctional carboxy reactive compound is an epoxy-functional polymer, which as used herein include oligomers. Exemplary polymers having multiple epoxy groups include the reaction products of one or more ethylenically unsaturated compounds (e.g., styrene, ethylene and the like) with an epoxy-containing ethylenically unsaturated monomer (e.g., a glycidyl C₁₋₄ (alkyl)acrylate, allyl glycidyl ethacrylate, and glycidyl itoconate).

The carboxy-reactive material is a monofunctional or a polyfunctional carboxy-reactive material that can be either polymeric or non-polymeric. The carboxy-reactive material can also include other functionalities that are either reactive or non-reactive under the described processing conditions. Non-limiting examples of reactive moieties include reactive silicon-containing materials, for example epoxy-modified silicone and silane monomers and polymers. If desired, a catalyst or co-catalyst system can be used to accelerate the reaction between the carboxy-reactive material and the polyester. Other functionalities which will not interfere with an epoxidizing action of the epoxidizing agent may also be present in the molecule, for example, esters, ethers, hydroxy, ketones, halogens, aromatic rings, etc.

For example, in one embodiment, the polyfunctional carboxy-reactive material is a styrene-acrylic copolymer (including an oligomer) containing glycidyl groups incorporated as side chains. Several useful examples are described in the International Patent Application WO 03/066704 A1, assigned to Johnson Polymer, LLC, which is incorporated herein by reference in its entirety. In one embodiment, the epoxy polymer is an epoxy functional (alkyl)acrylic monomer and at least one non-functional styrenic and/or (alkyl)acrylic monomer. Non-limiting examples of epoxy-functional (meth)acrylic monomers include both acrylates and methacrylates. Examples of these monomers include, but are not limited to, those containing 1,2-epoxy groups such as glycidyl acrylate and glycidyl methacrylate. Other suitable epoxy- functional monomers include allyl glycidyl ether, glycidyl ethacrylate, and glycidyl itaconate. These materials are based on copolymers with styrene and acrylate building blocks that have glycidyl groups incorporated as side chains. A high number of epoxy groups per polymer chain is desired, at least about 10, for example, or greater than about 15, or greater than about 20. These polymeric materials generally have a molecular weight greater than about 3000, preferably greater than about 4000, and more preferably greater than about 6000. These are commercially available from Johnson Polymer, LLC under the Joncryl® trade name, preferably the Joncryl® ADR 4368 material.

Another example of a carboxy reactive copolymer is the reaction product of an epoxy-functional C₁₋₄(alkyl)acrylic monomer with a non-functional styrenic and/or C₁₋₄(alkyl)acrylate and/or olefin monomer. In one embodiment, the epoxy polymer is the reaction product of an epoxy-functional (meth)acrylic monomer and a non-functional styrenic and/or (meth)acrylate monomer. These carboxy reactive compounds are characterized by relatively low molecular weights. In another embodiment, the carboxy reactive compound is an epoxy-functional styrene (meth)acrylic copolymer produced from an epoxy functional (meth)acrylic monomer and styrene. Examples of specific epoxy-functional (meth)acrylic monomers include, but are not limited to, those containing 1,2-epoxy groups such as glycidyl acrylate and glycidyl methacrylate.

Suitable C₁₋₄(alkyl)acrylate comonomers include, but are not limited to, acrylate and methacrylate monomers such as methyl acrylate, ethyl acrylate, n-propyl acrylate, i-propyl acrylate, n-butyl acrylate, s-butyl acrylate, i-butyl acrylate, t-butyl acrylate, n-amyl acrylate, i-amyl acrylate, isobomyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butyl-methacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, and isobornyl methacrylate. Combinations comprising at least one of the foregoing comonomers can be used.

Suitable styrenic monomers include, but are not limited to, styrene, alpha-methyl styrene, vinyl toluene, p-methyl styrene, t-butyl styrene, o-chlorostyrene, and mixtures comprising at least one of the foregoing. In certain embodiments, the styrenic monomer is styrene and/or alpha-methyl styrene.

Epoxy functional materials suitable for use as the carboxyl reactive group contain aliphatic or cycloaliphatic epoxy or polyepoxy functionalization. Generally, epoxy functional materials suitable for use herein are derived by the reaction of an epoxidizing agent, such as peracetic acid, and an aliphatic or cycloaliphatic point of unsaturation in a molecule.

In another embodiment, the carboxy reactive compound is an epoxy compound having two terminal epoxy functionalities, and optionally additional epoxy (or other) functionalities. The compound can further contain only carbon, hydrogen, and oxygen. Difunctional epoxy compounds, in particular those containing only carbon, hydrogen, and oxygen can have a molecular weight of below about 1000 g/mol, to facilitate blending with the polyester resin. In one embodiment, the difunctional epoxy compounds have at least one of the epoxide groups on a cyclohexane ring. Exemplary difunctional epoxy compounds include, but are not limited to, 3,4-epoxycyclohexyl-3,4-epoxycyclohexyl carboxylate, bis(3,4-epoxycyclohexylmethyl) adipate, vinylcyclohexene di-epoxide, bisphenol diglycidyl ethers such as bisphenol-A diglycidyl ether, tetrabromobisphenol-A diglycidyl ether, glycidol, diglycidyl adducts of amines and amides, diglycidyl adducts of carboxylic acids such as the diglycidyl ester of phthalic acid the diglycidyl ester of hexahydrophthalic acid, and bis(3,4-epoxy-6-methylcyclohexylmethyl) adipate, butadiene diepoxide, vinylcyclohexene diepoxide, dicyclopentadiene diepoxide, and the like. Especially preferred is 3,4-epoxycyclohexyl-3,4 epoxycyclohexylcarboxylate.

The difunctional epoxide compounds can be made by techniques well known to those skilled in the art. For example, the corresponding α- or β-dihydroxy compounds can be dehydrated to produce the epoxide groups, or the corresponding unsaturated compounds can be epoxidized by treatment with a peracid, such as peracetic acid, in well-known techniques. The compounds are also commercially available.

Other preferred materials with multiple epoxy groups are acrylic and/or polyolefin copolymers and oligomers containing glycidyl groups incorporated as side chains. Suitable epoxy-functional materials are available from Dow Chemical Company under the tradename D.E.R.332, D.E.R.661, and D.E.R.667; from Resolution Performance Products under the trade name EPON Resin 1001F, 1004F, 1005F, 1007F, and 1009F; from Shell Oil Corporation under the tradenames Epon 826, 828, and 871; from Ciba-Giegy Corporation under the tradenames CY-182 and CY-183; and from Dow Chemical Co. under the tradename ERL-4221 and ERL-4299. As set forth in the Examples, Johnson Polymer Co is a supplier of an epoxy functionalized material known as ADR4368 and 4300. A further example of a polyfunctional carboxy-reactive material is a co- or terpolymer including units of ethylene and glycidyl methacrylate (GMA), sold by Arkema under the trade name LOTADER^{®}.

In still another embodiment, the carboxy-reactive material is a multifunctional material having two or more reactive groups, wherein at least one of the groups is an epoxy group and at least one of the groups is a group reactive with the polyester, but is not an epoxy group. The second reactive group can be a hydroxyl, an isocyanate, a silane, and the like. Examples of such multifunctional carboxy-reactive materials include materials with a combination of epoxy and silane functional groups, preferably terminal epoxy and silane groups. The epoxy silane is generally any kind of epoxy silane wherein the epoxy is at one end of the molecule and attached to a cycloaliphatic group and the silane is at the other end of the molecule. The epoxy silane which is contacted with and reacts with the polyester is generally any kind of epoxy silane wherein the epoxy is at one end of the molecule and attached to a cycloaliphatic group and the silane is at the other end of the molecule. In one embodiment, the carboxy reactive compound can be Glycidoxy trialkoxy silane. Such materials include, for example, β-(3,4-epoxycyclohexyl) ethyltriethoxysilane, available under the trade name CoatOSil 1770 from GE. Other examples are β-(3,4-epoxycyclohexyl) ethyltrimethoxysilane, available under the trade name Silquest A-186 from GE, and 3-glycidoxypropyltriethoxysilane, available under the trade name Silquest Y-15589 from GE.

Improved impact strength is obtained by melt compounding polybutylene terephthalate with ethylene homo- and copolymers functionalized with either acid or ester moieties as taught in U.S. Pat. Nos. 3,405,198; 3,769,260; 4,327,764; and 4,364,280. Polyblends of polybutylene terephthalate with a styrene-alpha-olefin-styrene triblock are taught in U.S. Pat. Nos. 4,119,607; and. 4,172,859 teaches impact modification of polybutylene terephthalate with random ethylene-acrylate copolymers and EPDM rubbers grafted with a monomeric ester or acid functionality. Preferred impact modifiers include core-shell impact modifiers, such as those having a core of poly(butyl acrylate) and a shell of poly(methyl methacrylate).

Processes known for the formation of the foregoing elastomer-modified graft copolymers include mass, emulsion, suspension, and solution processes, or combined processes such as bulk-suspension, emulsion-bulk, bulk-solution or other techniques, using continuous, semi batch, or batch processes.

Suitable mixing methods for achieving the desired shear and temperature conditions can be, for example, extrusion kneading, roll kneading, or mixing in a two-roll mill, a Banbury mixer, a single screw or twin-screw extruder, a double blade batch mixer, a vertical shaft mixer, a planetary mixer, a Becken blade mixer, a dispersion blade mixer, a sigma mixer, in continuous batch mixers of the hydrofoil, turbine blade, or CF impeller blade type, static mixers and the like devices, which are capable of imparting a controlled degree of shear. In one embodiment, a single screw or a twin-screw extruder is used. The twin-screw extruder can be co-rotating, counter rotating, intermeshing, non-intermeshing, or the like, for example a, planetary gear extruder readco continuous mixer. The mixing can be conducted in a continuous or a batch process. When melt blending or reactive melt blending is used, the mixing is generally conducted at a temperature and for a time effective to produce a molten mixture of a substantially homogenous composition. The process can be a continuous polymerization process wherein the said reaction is conducted in a continuous mode in a train of reactors of at least two in series or parallel. In an alternate embodiment the process can be a batch polymerization process wherein the reaction is conducted in a batch mode in a single vessel or in multiple vessels and the reaction can be conducted in two or more stages depending on the number of reactors and the process conditions. In an alternate embodiment, the process can be carried out in a semi-continuous polymerization process where the reaction is carried out in a batch mode and the additives are added continuously. Alternatively, the reaction is conducted in a continuous mode where the polymer formed is removed continuously and the reactants or additives are added in a batch process. In an alternate embodiment the product from at least one of the reactors can be recycled back into the same reactor intermittently by "pump around" to improve the mass transfer and kinetics of reaction. Alternatively the reactants and the additives are stirred in the reactors with a speed of about 25 revolutions per minute (here in after "rpm") to about 2500 rpm.

The time, temperature, apparatus, component addition sequence and location (along an extruder, e.g.), and other conditions of mixing are accordingly selected so as to produce a composition having an improved modulus and elongation compared to compositions not containing both carboxy reactive compound and fluoropolymer. Those of ordinary skill in the art will be able to adjust the degree of shear and temperature, as well as other parameters, without undue additional experimentation using the guidance provided herein.

In one embodiment, the compositions can be prepared by pre-combining the components prior to mixing under-suitable conditions of temperature, although such pre-combining is not necessary. The pre-combining may be carried out in any conventional mixer (e.g., drum mixer, ribbon mixer, vertical spiral mixer, Muller mixer, sigma mixer, chaotic mixer, static mixer, and the like). Pre-combining is typically carried out at a temperature below the degradation temperature of the matrix polymer, fluoropolymer, and any encapsulating polymer. Alternatively, a portion of the matrix polymer can be pre-combined with the fluoropolymer (with or without one or more additives) to prepare a masterbatch, and then the remaining matrix polymer can be added and mixed therewith later.

The mixing temperature is also preferably below the degradation temperature of the polymer. Suitable temperatures can be about 20°C to about 450°C, more specifically about 50°C to about 400°C, even more specifically about 100°C to about 300°C. At these temperatures, processing can be conducted for about 2 seconds to about 10 hours, specifically about 3 seconds to about six hours.

In one embodiment of the present invention, a catalyst can be employed. The catalyst can be an acidic, or basic or a transition metal based catalyst. The catalyst can be any of the catalysts commonly used in the prior art such as alkaline earth metal oxides such as magnesium oxides, calcium oxide, barium oxide and zinc oxide; alkali and alkaline earth metal salts; a Lewis catalyst such as tin or titananium compounds; a nitrogen-containing compound such as tetra-alkyl ammonium hydroxides used like the phosphonium analogues, e.g., tetra-alkyl phosphonium hydroxides or acetates. The Lewis acid catalysts and the aforementioned metal oxide or salts can be used simultaneously. In one embodiment, the catalyst is not a tertiary amine or an alkali metal hydroxide.

The catalyst can be containing at least one selected from the group consisting of lithium salts, sodium salts, potassium salts, magnesium salts, calcium salts, zinc salts, and manganese salts of stearic acid and acetic acid. In one embodiment, the catalyst can be selected from the group consisting of alkali metal carboxylates, alkaline-earth metal carboxylates, aluminium, zinc, and manganese carboxylates. The metals contained in the metal carboxylates include alkali metals, such as lithium, sodium, and potassium; alkaline-earth metals, such as magnesium, calcium, strontium, and barium; and other metals, such as aluminium, zinc, and manganese. In one embodiment, the catalyst can be alkali metal halides, alkali metal carboxylates, alkali metal enolates, amine hydrohalides, alkali metal carbonates and quaternary ammonium halides. The carboxylic acid for forming salts together with those metals can be either of monocarboxylic acids, dicarboxylic acids and other polycarboxylic acids, and also can be polymer-like carboxylic acids. The number of carbon atoms of the carboxylic acid is not particularly limited. However, the number of carbon atoms of the carboxylic acid is 1 or more, which influences the rate of crystallization of the highly polymerized polyester obtained. In one embodiment, the carboxylic acids of the carboxylates include aliphatic carboxylic acids having a carbon number in the range of 1 to 20, and particularly in the range of 1 to 10; alicyclic carboxylic acids having a carbon number in the range of 3 to 12; and aromatic carboxylic acids having a carbon number in the range of 7 to 20. Specifically, the carboxylic acids include acetic acid, propionic acid, butyric acid, caproic acid, adipic acid, stearic acid, palmitic acid, montanic acid, cyclohexanecarboxylic acid, benzoic acid, and phthalic acid.

In one embodiment, the catalyst can be lithium fluoride, lithium iodide, potassium bromide, potassium iodide, sodium dihydrogen phosphate, sodium acetate, sodium benzoate, sodium caproate, sodium stearate, sodium ascorbate and dodecyltrimethylammonium bromide and combinations thereof. In another embodiment, the metal catalysts may be selected from the group consisting of aluminum, bismuth, calcium, cesium, cobalt, chromium, iron, magnesium, manganese, nickel, tin, organotin, titanium, zinc, zirconium compounds. While a wide variety of catalysts can be used, organic titanates such as tetrabutyl titanate may used alone or in so combination with magnesium or calcium acetates. In yet another embodiment the catalyst can be complex titanates, such as derived from alkali or alkaline earth metal alkoxides and titanate esters, inorganic titanates, such as lanthanum titanate, calcium acetate/antimony trioxide mixtures and lithium and magnesium alkoxides.

Inorganic catalysts include compounds such as the hydroxides, hydrides, amides, carbonates, phosphates, borates, carboxylates etc., of alkali metals such as sodium, potassium, lithium, cesium, etc., and of alkali earth metals such as calcium, magnesium, barium, etc., can be cited such as examples of alkali or alkaline earth metal compounds. Typical examples include sodium stearate, sodium carbonate, sodium acetate, sodium bicarbonate, sodium benzoate, sodium caproate, or potassium oleate.

Co-catalysts may also be added to the mixture. In one embodiment, the co-catalyst can be at least one selected from the group consisting halides, carbonates or bicarbonates of alkali metals or alkaline earth metals, such as lithium chloride, potassium iodide or potassium carbonate; and alkali metal salts or alkaline earth metal salts, such as lithium salt, sodium salt, potassium salt, beryllium salt, magnesium salt, calcium salt, strontium salt or barium salt of aryl- or alkyl-substituted phosphines, such as tributyl phosphine, trioctyl phosphine or triphenyl phosphine, saturated fatty acids, such as butyric acid, valeric acid, caproic acid, lauric acid, myristic acid, palmitic acid, stearic acid, behenic acid or montanic acid, or unsaturated fatty acids, such as crotonic acid, oleic acid or elaidic acid. The amounts of the catalyst can vary. In one embodiment, the catalyst is present in a range from about 0.01 to 1.5 by weight of total composition.

In another embodiment, a catalyst quencher is added to the reaction mixture to quench any metal salts that can be present in the polyester. The choice of the quencher is essential to avoid color formation. In one embodiment of the invention, the catalyst quenchers are phosphorus containing derivatives, examples include but are not limited to diphosphites, phosphonates, metaphosphoric acid; arylphosphinic and arylphosphonic acids; polyols; carboxylic acid derivatives and combinations thereof. The amount of the quencher added to the thermoplastic composition is an amount that is effective to stabilize the thermoplastic composition. In one embodiment, the amount is at least about 0.001 weight percent, preferably at least about 0.01 weight percent, based on the total amount of the thermoplastic resin composition. The amount of quencher used is not more than the amount effective to stabilize the composition in order not to deleteriously affect the advantageous properties of said composition. In one embodiment, the amount can range from 0.001 or 0.01 weight percent, based on the total amount of the thermoplastic resin composition.

After mixing, the composition so formed can be made into a particulate form by techniques such as pelletizing or grinding. In one embodiment, the molten mixture from an extruder can be fed into a die. Some non-limiting examples of suitable dies include an annular die, coat hanger die, spiral mandrel die, crosshead die, T-die, fishtail die, spider die, single, or double roller die, or profile extrusion die.

Compositions of the present invention and articles derived from the composition can have useful properties. In an advantageous feature, polyester compositions of the present invention and articles derived from the composition have a glass transition temperature of at least 60°C. In another embodiment the polyester compositions have a glass transition of at least 85 °C. In another embodiment the polyester composition has a char yield of at least 4 percent. In yet another embodiment the polyester composition may be transparent, translucent or opaque. The term "transparent" as used herein would refer to a composition that transmits at least 70 % in the region ranging from 250 nm to 800 nm. The high glass transition temperature and high char can be obtained without significant degradation of the other properties such as tensile properties of the polyester composition. In one embodiment, the polyester compositions and articles derived from the polyester compositions have good heat, mechanical properties and good flow properties.

In one embodiment, the blend compositions have a glass transition temperature of at least 85 °C. In another embodiment the blends have a glass transition temperature of at least 95 °C. In one embodiment, the blend of the polyester with polycarbonate is transparent. In another embodiment the blend composition has a transmission of at least 70 % in the region ranging from 250 nm to 800 nm. The high glass transition temperature can be obtained of the blend composition. In one embodiment, the blend compositions and articles derived from the blend compositions have good heat, mechanical properties and good flow properties.

The melt blended compositions can be molded into useful articles by a variety of means, for example injection molding, extrusion molding, rotation molding, foam molding, calendar molding, blow molding, thermoforming, compaction, melt spinning, and the like, to form articles. Because of their advantageous mechanical characteristics, especially preferred are articles that will be exposed to ultraviolet (UV) light, whether natural or artificial, during their lifetimes, and most particularly outdoor and indoor articles. Suitable articles are exemplified by but are not limited to aircraft, automotive, truck, military vehicle (including automotive, aircraft, and waterborne vehicles), scooter, and motorcycle exterior and interior components, including panels, quarter panels, rocker panels, trim, fenders, doors, decklids, trunk lids, hoods, bonnets, roofs, bumpers, fascia, grilles, mirror housings, pillar appliques, cladding, body side moldings, wheel covers, hubcaps, door handles, spoilers, window frames, headlamp bezels, headlamps, tail lamps, tail lamp housings, tail lamp bezels, license plate enclosures, long fiber reinforcements, roof racks, and running boards; enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal water-craft; jet-skis; pools; spas; hot-tubs; steps; step coverings; building and construction applications such as glazing, roofs, windows, floors, decorative window furnishings or treatments; treated glass covers for pictures, paintings, posters, and like display items; wall panels, and doors; counter tops; protected graphics; outdoor and indoor signs; enclosures, housings, panels, and parts for automatic teller machines (ATM); computer; desk-top computer; portable computer; lap-top computer; palm- held computer housings; monitor; printer; keyboards; FAX machine; copier; telephone; phone bezels; mobile phone; radio sender; radio receiver; enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; shoe laces; articles made from plastic-wood combinations; golf course markers; utility pit covers; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated painted articles; coated dyed articles; coated fluorescent articles; coated foam articles; and like applications. The invention further includes additional fabrication operations of such articles, including but not limited to molding, in-mold decoration, baking in a paint oven, lamination, and/or thermoforming. The articles made from the composition of the present invention can be used widely in automotive industry, home appliances, electrical components, and telecommunications.

The invention provides previously unavailable advantages. In on embodiment, for instance, the invention provides a polyester composition having a combination of high heat and high char while not interfering with the desirable properties of the polyester. In addition, the invention also provides a transparent blend of polyester with polycarbonate that has high heat and good optical and mechanical properties that are advantageous.

The invention is further described in the following illustrative examples in which all parts and percentages are by weight unless otherwise indicated.

### EXAMPLES

### MATERIALS

Table 1 provides the details of the materials that are mentioned in the examples and the source from where they were procured.

**Table 1:**

| Abbreviation | | Source |
|---|---|---|
| DmPXG | Dimethyl Benzene Dimethanol also known as dimethyl paraxylene glycol, | GE Plastics |
| DMT | Dimethyl Terephthalate | Garware Chemicals India Limited |
| DMI | Dimethyl Isophthalate | Aldrich Chemicals. |
| DMCD | Dimethyl Cyclohexane Dicarboxylate | Eastman Chemicals |
| PXG | Benzene Dimethanol. The material was vacuum distilled to remove metal impurities. | Aldrich |
| PC | Polycarbonate. | GE Plastics |
| N/A | Dioxane | SD Fine Chemicals |
| N/A | Potassium Carbonate | Merck Chemicals |
| N/A | Titanium Isopropoxide | Fluka Chemicals |
| N/A | Paraxylene | SD Fine Chemicals |
| N/A | Paraformaldehyde | Merck Chemicals |
| N/A | Methanol | SD Fine Chemicals |

### PROCEDURE / TECHNIQUES

### DMPXG SYNTHESIS

Paraxylene, procured from SD Fine Chemicals was subjected to chloromethylation using paraformaldehyde and hydrochloric acid (35 wt%) obtained from Merck Chemicals. 706 gm of paraxylene, 500 gm of paraformaldehyde was added to a mixing vessel under stirring conditions followed by drop wise addition of about 3380 gm of hydrochloric acid (35 wt%) through a dropping funnel over a period of 1 hour. The mixture was heated to about 110° C and kept under reflux for 4 hours. The reaction was cooled to 20° C and filtered to get 160 gm of crude 2, 5 dimethyl 1,4 bis- chloromethyl benzene.

The crude 2, 5 dimethyl 1,4 bis- chloromethyl benzene obtained was treated with 2.8 liters of water and 500 ml of 1, 4 Dioxane. Dioxane GR grade was procured from SD Fine Chemicals. The mixture was made as a suspension under stirring conditions. To this stirred mixture, 160 gm of potassium carbonate procured from Merck Chemicals, was added. The mixture was hydrolyzed under reflux at 100° C for approximately 3 hours, till a clear solution was obtained. The mixture was further subjected to distillation to remove dioxane and the mixture was filtered to isolate crude 2,5 dimethyl benzene 1,4 dimethanol. The crude product was crystallized in 500 ml of methanol to get 110 gm of purified 2,5 dimethyl benzene 1,4 dimethanol (99.5 wt%).

### EXAMPLES 1-3 AND COMPARATIVE EXAMPLE 1-2.

### EXAMPLE 1 (Ex.1; Homopolymer of DMCD and DmPXG hereinafter also called "DmPXD")

The polymerization was carried out in a 500 ml Stainless Steel (SS316 grade) reactor having a double helical stirrer, a vapour line and a condenser. The condenser was further connected to a receiver, a vacuum trap and vacuum pump. DmPXG and DMCD was taken in molar equivalents of 1:1 and heated to 180° C in the reactor under an inert atmosphere of nitrogen. When the melt reached 180° C, 100 ppm of Titanium Isopropoxide was as added to the polymerization reactor. The temperature was slowly increased to 225° C at a rate of 1° C per minute and maintained at 225° C for 20 minutes. During this heating phase, methanol was removed and collected in a receiver. The temperature was increased at a rate of 1° C per minute to 250° C and maintained for 30 min at this temperature. During this heating phase, vacuum was applied and the pressure in the reactor was reduced in steps of 100 mbar. The pressure was reduced to less than 1 mbar and maintained at this pressure for 30 minutes. Simultaneously methanol was removed during this phase and the molecular weight is built steadily. When the torque increases was greater than 45% of the motor load, the vacuum is released by nitrogen and the material is drained under positive nitrogen pressure of 1 to 2 bar. The drained material was collected as strands and cut into pellets.

### EXAMPLE 2 (Ex.2; Homopolymer of DMI and DmPXG hereinafter also called "DmPXI")

The polymerization was carried out by reacting molar equivalents of DMI and DmPXG under the conditions similar to Example 1. However the final temperature was increased to 255° C and maintained for 45 min under vacuum of less than 1mbar.

### EXAMPLE 3 (Ex.3; Homopolymer of DMT and DmPXG hereinafter also called "DmPXT")

The polymerization was carried out in a 500 ml Stainless Steel (SS316 grade) reactor having a double helical stirrer, a vapour line and a condenser. The condenser was further connected to a receiver, a vacuum trap and vacuum pump. DmPXG and DMT was taken in molar equivalents of 1 : 1.02 and heated to 190° C in the reactor under an inert atmosphere of nitrogen. When the melt reached 190° C, 100 ppm of Titanium Isopropoxide was as added to the polymerization reactor. The temperature was increased to 295° C at a rate of 5° C per minute and maintained at 295° C for 60 minutes. During this heating phase, methanol was removed and collected in a receiver. The temperature was increased at a rate of 3° C per minute to 320° C and maintained for 45 min at this temperature. During this heating phase, vacuum was applied and the pressure in the reactor was reduced in steps of 100 mbar. The pressure was reduced to less than 1 mbar and maintained at this pressure for 30 minutes. Simultaneously methanol was removed during this phase and the molecular weight is built steadily. When the torque increases was greater than 45% of the motor load, the vacuum was released by nitrogen and the material is drained under positive nitrogen pressure of 1 to 2 bar. The drained material is collected as strands and cut into pellets.

### COMPARATIVE EXAMPLE 1 (CEx.1; PXD)

PXD polymerization was carried out by reacting molar equivalent of PXG and DMCD under the conditions similar to Example 2.

### COMPARATIVE EXAMPLE 2 (CEx.2; PXI)

The polymerization was carried out by reacting molar equivalent of PXG with DMI under the conditions similar to Example 1.

### TESTING PROCEDURES

The following testing procedures were used. The glass transition temperature (Tg) and the melt temperature Tm were measured using differential scanning calorimeter from TA instruments. The heating rate was maintained at 20° C per minute from room temperature to 275° C and kept at isothermal condition for 5 minutes. Later the material was cooled at a rate of 20° C per minute to 10° C. The heating and cooling cycles were repeated again and the glass transition and melting point were measured in the second heating cycle and the crystallization temperature was measured in second cooling cycle. The char measurement was carried out by thermo gravimetric analysis technique using TA instrument. The sample was heated at 2° C per minute under nitrogen atmosphere. The final residual char yield was measured using the weight loss method. Transmission and Delta YI were measured using Mcbath Colorimetric using 60:40 ratio of phenol and tetrachloroethane mixture as solvent. The solution YI and transmission was measured and similarly the YI for solution was measured. The difference in YI for polymer solution to solvent gives the Delta YI and the average of transmission of the polymer solution over the range of 350 nm to 750 nm gave the transmission of the polymer sample.

### RESULTS AND DISCUSSION

**Table 2:**

| Properties (units) | Ex.1 (DmPXD) | Ex.2 (DmPXI) | Ex.3 (DmPXT) | C.Ex.1(PXD) | C.Ex.2 (PXI) |
|---|---|---|---|---|---|
| | | | | | |
| Tg (°C) | 93.2 | 98 | 91.4 | 55 | 80 |
| Tm (°C) | - | - | 294 | - | - |
| Mw (Daltons) | 30600 | 26800 | - | 43200 | 37000 |
| Mn (Daltons) | 10500 | 10798 | - | 21000 | 19000 |
| PDI | 2.9 | 2.48 | - | 2.06 | 1.95 |
| IV (dl/gm) | 0.44 | 0.4 | 0.21 | 0.55 | 0.42 |
| Char (%) | 7 | 21.5 | | 8 | 21 |
| Delta YI | 28.4 | 24.3 | - | 41.3 | 35.2 |
| Transmission (%) | 71.2 | 74.1 | - | 68.9 | 71.3 |

The examples showed that the enhancement of the glass transition was observed for the polyesters with dimethylparaxylene glycol. However, this higher heat is obtained while maintaining a high value for char (Examples 1-3 in Table 2).

### EXAMPLE 4-6 AND COMPARATIVE EXAMPLE 3

### PROCEDURE / TECHNIQUES

### EXAMPLE 4-6

Blends were made with polycarbonate obtained from General Electric Company as Lexan® polycarbonate resin blended with DmPXD polyester. The blends were obtained by mixing polycarbonate and the DmPXD polyester in different ratios as given in Table 2. The blending was carried out on a 25 mm Werner & Pfleiderer ZSK co-rotating Twin Screw Extruder with a screw speed of about 300 rotations per minute. The compounding was carried out at a temperature of about 100 °C, which was gradually increased to 200-240-255-265-265-265-270-270-270 °C to form a melt. The melt was then extruded in the form of strand that was cooled through a water bath prior to pelletization. The pellets were dried for about 4 hours at about 100 °C in a forced air-circulating oven prior to molding. The samples were injection molded in 85 Ton Injection Molding machine as per ISO test protocol requirements. The temperature profile used for injection molding was 100-240-250-260-265 °C.

### COMPARATIVE EXAMPLE 3

Blend of polycarbonate obtained from General Electric Company as Lexan® polycarbonate resin and PXD polyester was obtained by following the procedure given above for Example 4-6 except that PXD polyester was employed in this case. The ratio of polycarbonate to PXD polyester was 75:25 weight percent respectively.

Tensile properties of the injection molded specimens were evaluated as per ISO 527. The samples were molded in a dumbbell with dimensions 170mm x 20 mm x 4mm (length x width x thickness). The optical properties like YI, Haze, Transmission were measured using a plaque of 3 mm thickness under transmission mode using a McBeth Spectrophotometer.

### RESULTS AND DISCUSSION

**Table 3.**

| | Ex.4 | CEx.3 |
|---|---|---|
| | | |
| DmPXD | 25 | |
| PXD | - | 25 |
| PC | 75 | 75 |
| Properties (units) | | |
| Tg (°C) | 129.4 | 118.6 |
| YI | 33.3 | 20.8 |
| Haze (%) | 4.2 | 9.5 |
| Transmission (%) | 82.5 | 85 |
| Tensile Modulus (Mpa) | 2360 | 2320 |
| Tensile Strength (Mpa) | 66 | 61 |
| Elongation @ Break | 55 | 95 |
| (%) | | |

From Table 3 it is observed that Ex 4 had higher heat in comparison to CEx.3, without affecting optical and mechanical properties. Also the blends of the DmPXD with PC in various weight ratio i.e. 50/50 (Ex.5) and 75/25 (Ex.6) also showed higher heat with the Tg being 118.3 °C and 109 °C, respectively.

While the invention has been illustrated and described in typical embodiments, the foregoing description is not intended to be limited to the details shown, since various modifications and substitutions can be made without departing in any way from the spirit of the present invention. As such, further modifications and equivalents of the invention herein disclosed may occur to persons skilled in the art using no more than routine experimentation, and all such modifications and equivalents are within the spirit and scope of the invention as defined by the following claims.

## Claims

1. A composition of matter comprising a polyester derived from:
i. greater than 80 mole percent of a diol having a disubstituted xylene glycol structure of the formula (I): 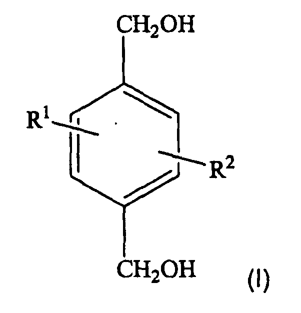 wherein R¹ and R² are independently selected from the group consisting of aliphatic radicals, aromatic radicals, cycloaliphatic radicals, sulfur containing compounds, and amines; and
ii. a diacid.

2. The composition of matter of Claim 1, wherein the composition of matter further comprises a polycarbonate.

3. The composition of matter of Claim 2, wherein the polycarbonate is present in an amount ranging from 0 to 85 weight percent based on the total weight of the composition.

4. The composition of Claim 2, comprising 5 to 95 weight percent of the polyester and 5 to 85 weight percent of the polycarbonate.

5. The composition of matter of any of Claims 1 - 4, wherein the diacid is selected from the group consisting of linear acids, terephthalic acids, isophthalic acids, phthalic acids, naphthalic acids, cycloaliphatic acids, bicyclo aliphatic acids, decahydro naphthalene dicarboxylic acids, norbornene dicarboxylic acids, bicyclo octane dicarboxylic acids, 1,4-cyclohexanedicarboxylic acid, adipic acid, azelaic acid, dicarboxyl dodecanoic acid, stilbene dicarboxylic acid, succinic acid, and combinations thereof.

6. The composition of matter of any of Claims 1 - 5, wherein the disubstituted xylene glycol is present in an amount of 80 to 100 mole percent, based on 100 mole percent of the total mole percent of diol.

7. The composition of matter of any of Claims 1 - 6, wherein the composition of matter further comprises an additional diol selected from the group consisting of ethylene glycol, propylene glycol, xylene glycol, butane diol, pentane diol, dipropylene glycol, 2-methyl-1,5-pentane diol, 1,6-hexane diol, dimethanol decalin, dimethanol bicyclo octane, cis- 1,4-cyclohexane dimethanol, trans-1,4-cyclohexane dimethanol, triethylene glycol, 1,10- decane diol, tricyclodecane dimethanol, xylene glycol, hydrogenated bisphenol-A, tetramethyl cyclobutane diol, substituted ortho xylene glycol, substituted meta xylene glycol, and combinations thereof.

8. The composition of matter of Claim 7, wherein the additional diol is present in an amount from 0 to 20 mole percent based on 100 mole percent of the total mole percent of diol.

9. The composition of matter of any of Claims 1 - 8, wherein the polyester has a glass transition temperature of at least 60 °C.

10. The composition of matter of any of Claims 1 - 9, wherein the polyester has a char yield of at least 4 %.

11. The composition of matter of Claim 1, wherein the composition of matter further comprises an additive selected from the group consisting of anti-oxidants, flame retardants, flow modifiers, impact modifiers, colorants, mold release agents, UV light stabilizers, heat stabilizers, lubricants, antidrip agents, and combinations thereof, wherein the additive is present in an amount ranging from 0 to 20 weight percent, based on the total weight of the composition.

12. The composition of matter of any of Claims 1 - 11, wherein the composition of matter further comprises a filler selected from the group consisting of calcium carbonate, mica, kaolin, talc, glass fibers, carbon fibers, carbon nanotubes, magnesium carbonate, sulfates of barium, calcium sulfate, titanium, nano clays, treated clays carbon black, silica, hydroxides of aluminum, hydroxides of ammonium, hydroxides of magnesium, zirconia, nanoscale titania, or a combination thereof, wherein the filler is present in an amount from 0 to 40 weight percent filler, based on the total weight of the composition.

13. An article derived from the composition of matter of any of Claims 1 - 12.

14. A process comprising:
a. mixing
i. greater than 80 mole percent of a disubstituted xylene glycol of formula (1): 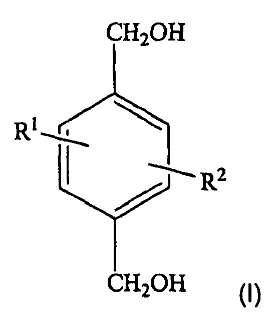 wherein R¹ and R² are independently selected from the group consisting of aliphatic radicals, aromatic radicals, cycloaliphatic radicals, sulfur containing compounds, amines, and halogen; and
ii. a diacid, to form a first mixture;
b. heating the first mixture at a temperature sufficiently high to form a composition of matter comprising a polyester derived from the disubstituted xylene glycol and the diacid.

15. A process comprising:
a. mixing a polyester and a polycarbonate to form a first mixture;
b. heating the first mixture at a temperature sufficiently high to form a composition of matter comprising a transparent blend of
i. greater than 80 mole percent of a polyester derived from a disubstituted xylene glycol of the formula (I): 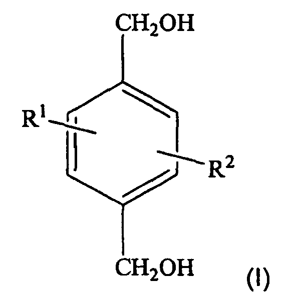 wherein R¹ and R² are independently selected from the group consisting of aliphatic radicals, aromatic radicals, cycloaliphatic radicals, sulfur containing compounds, amines, and halogen; and a diacid;
ii. from 5 to 85 weight percent of a polycarbonate.

## Patentansprüche

1. Substanzzusammensetzung umfassend einen Polyester, der sich von folgendem ableitet:
i. mehr als 80 Mol-% von einem Diol mit einer disubstituierten Xylenglycolstruktur der Formel (I): 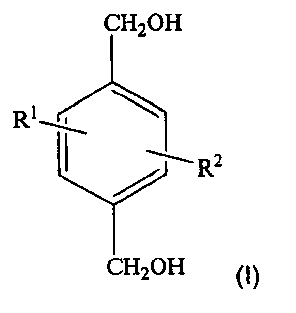 wobei R¹ und R² unabhängig aus der Gruppe ausgewählt sind bestehend aus aliphatischen Resten, aromatischen Resten, cycloaliphatischen Resten, Schwefel-enthaltenden Verbindungen und Aminen; und
ii. einer Disäure.

2. Substanzzusammensetzung nach Anspruch 1, wobei die Substanzzusammensetzung weiterhin ein Polycarbonat umfasst.

3. Substanzzusammensetzung nach Anspruch 2, wobei das Polycarbonat in einer Menge im Bereich von 0 bis 85 Gew.-%, bezogen auf das Gesamtgewicht der Zusammensetzung, vorhanden ist.

4. Zusammensetzung nach Anspruch 2, umfassend 5 bis 95 Gew.-% des Polyesters und 5 bis 95 Gew.-% des Polycarbonats.

5. Substanzzusammensetzung nach einem der Ansprüche 1 bis 4, wobei die Disäure aus der Gruppe ausgewählt ist bestehend aus linearen Säuren, Terephthalsäuren, Isophthalsäuren, Phthalsäuren, Naphthalsäuren, cycloaliphatischen Säuren, bicycloaliphatischen Säuren, Decahydronaphthalindicarboxylsäuren, Norbornendicarboxylsäuren, Bicyclooctandicarboxylsäuren, 1,4-Cyclohexanedicarboxylsäuren, Adipinsäuren, Azelainsäure, Dicarboxyldodecansäure, Stilbendicarboxylsäure, Succinsäure und Kombinationen davon.

6. Substanzzusammensetzung nach einem der Ansprüche 1 bis 5, wobei das disubstituierte Xylenglycol in einer Menge von 80 bis 100 Mol-%, bezogen auf 100 Mol-% der Mol-% insgesamt von Diol vorhanden ist.

7. Substanzzusammensetzung nach einem der Ansprüche 1 - 6, wobei die Substanzzusammensetzung weiterhin ein zusätzliches Diol umfasst, das aus der Gruppe ausgewählt ist, bestehend aus Ethylenglycol, Propylenglycol, Xylenglycol, Butandiol, Pentandiol, Dipropylenglycol, 2-Methyl-1,5-pentandiol, 1,6-Hexandiol, Dimethanoldecalin, Dimethanolbicyclooctan, cis-1,4-Cyclohexandimethanol, trans-1,4-Cyclohexandimethanol, Triethylenglycol, 1,10-Decandiol, Tricyclodecandimethanol, Xylenglycol, hydriertem Bisphenol A, Tetramethylcyclobutandiol, substituiertem ortho-Xylenglycol, substituiertem meta-Xylenglycol, und Kombinationen davon.

8. Substanzzusammensetzung nach Anspruch 7, wobei das zusätzliche Diol in einer Menge von 0 bis 20 Mol-%, bezogen auf 100 Mol-% der Mol-% insgesamt von Diol vorhanden ist.

9. Substanzzusammensetzung nach einem der Ansprüche 1 bis 8, wobei der Polyester eine Glasübergangstemperatur von mindestens 60 °C aufweist.

10. Substanzzusammensetzung nach einem der Ansprüche 1 bis 9, wobei der Polyester eine Verkohlungsausbeute von mindestens 4 % aufweist.

11. Substanzzusammensetzung nach Anspruch 1, wobei die Substanzzusammensetzung weiterhin ein Additiv umfasst, das aus der Gruppe ausgewählt ist, bestehend aus Antioxidantien, Flammverzögerern, Fließmodifikatoren, Schlagzähigkeitsmodifikatoren, Farbmitteln, Formtrennmitteln, UV-Licht-Stabilisatoren, Wärmestabilisatoren, Schmiermitteln, Antitropfmitteln, und Kombinationen davon, wobei das Additiv in einer Menge im Bereich von 0 bis 20 Gewichtsprozent, bezogen auf das Gesamtgewicht der Zusammensetzung, vorhanden ist.

12. Substanzzusammensetzung nach einem der Ansprüche 1-11, wobei die Substanzzusammensetzung weiterhin einen Füllstoff umfasst, der aus der Gruppe ausgewählt ist, bestehend aus Calciumcarbonat, Mica, Kaolin, Talk, Glasfasern, Kohlefasern, Kohlenstoff-Nanoröhrchen, Magnesiumcarbonat, Sulfaten von Barium, Calciumsulfat, Titan, Nanotonen, behandelten Tonen, Ruß, Silica, Hydroxiden von Aluminium, Hydroxiden von Ammonium, Hydroxiden von Magnesium, Zirkoniumoxid, Nano-Titandioxid, oder einer Kombination davon, wobei der Füllstoff in einer Menge von 0 bis 40 Gewichtsprozent Füllstoff, bezogen auf das Gesamtgewicht der Zusammensetzung, vorhanden ist.

13. Gegenstand, der sich von der Substanzzusammensetzung nach einem der Ansprüche 1-12 ableitet.

14. Verfahren, umfassend:
a. Mischen von
i. mehr als 80 Mol-% eines disubstituierten Xylenglycols der Formel (I): 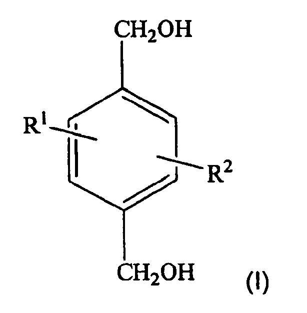 wobei R¹ und R² unabhängig aus der Gruppe ausgewählt sind bestehend aus aliphatischen Resten, aromatischen Resten, cycloaliphatischen Resten, Schwefel-enthaltenden Verbindungen, Aminen, und Halogen; und
ii. einer Disäure, um ein erstes Gemisch zu bilden;
b. Erhitzen des ersten Gemisches bei einer Temperatur, die hoch genug ist, um eine Substanzzusammensetzung zu bilden, die einen Polyester umfasst, der sich von dem disubstiuierten Xylenglycol und der Disäure ableitet.

15. Verfahren umfassend:
a. Mischen eines Polyesters und eines Polycarbonats, um ein erstes Gemisch zu bilden;
b. Erhitzen des ersten Gemisches bei einer Temperatur, die hoch genug ist, um eine Substanzzusammensetzung zu bilden, die eine transparente Mischung von folgendem ist
i. mehr als 80 Mol-% von einem Polyester, der sich von einem disubstituierten Xylenglycol der Formel (I) ableitet: 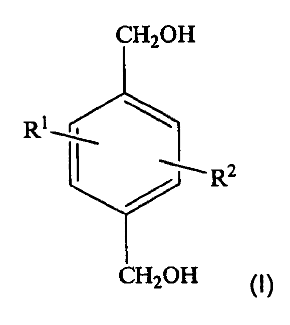 wobei R¹ und R² unabhängig aus der Gruppe ausgewählt sind, bestehend aus aliphatischen Resten, aromatischen Resten, cycloaliphatischen Resten, Schwefel-enthaltenden Verbindungen und Aminen, und Halogen; und einer Disäure;
ii. von 5 bis 85 Gew.-% eines Polycarbonats.

## Revendications

1. Composition de matière comprenant un polyester dérivé de:
i. plus de 80 mol % d'un diol ayant une structure de xylèneglycol disubstituée de la formule (I): 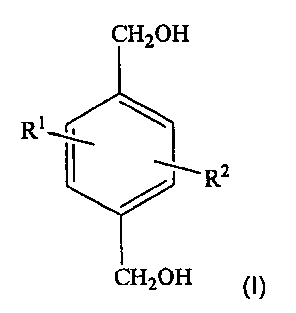 dans laquelle R¹ et R² indépendamment sont sélectionnés parmi le groupe consistant en les résidus aliphatiques, les résidus aromatiques, les résidus cyclo aliphatiques, les composés contenant de soufre et les amines; et
ii. un diacide.

2. Composition de matière selon la revendication 1, dans laquelle la composition de matière comprend en outre un polycarbonate.

3. Composition de matière selon la revendication 2, dans laquelle le polycarbonate est présent dans une quantité dans la gamme de 0 à 85 % en poids, en relation au poids total de la composition.

4. Composition selon la revendication 2, comprenant 5 à 95 % en poids des polyesters et 5 à 95 % en poids du polycarbonate.

5. Composition de matière selon l'une des revendications 1 à 4, dans laquelle le diacide est sélectionné parmi le groupe consistant en les acides linéaires, les acides téréphtaliques, les acides phtaliques, les acides naphtaliques, les acides cycloaliphatiques, les acides bicycloaliphatiques, les acides decahydronaphtaliniques dicarboxyliques, les acides norbornène dicarboxyliques, les acides bicyclooctane dicarboxyliques, l'acide 1,4-cyclohexane dicarboxylique, l'acide adipique, l'acide azélaique, l'acide dodecanoïque dicarboxylique, l'acide stilbène dicarboxylique, l'acide succinique, et les combinaisons de ceux-ci.

6. Composition de matière selon la revendication 1 à 5, dans laquelle le xylèneglycol disubstitué est présent dans une quantité de 80 à 100 mol % en relation à 100 mol % de la quantité totale du pourcentage molaire de diol.

7. Composition de matière selon l'une des revendications 1 à 6, dans laquelle la composition de matière comprend en outre un diol additionnel, qui est sélectionné parmi le groupe consistant en l'éthylèneglycol, le propylèneglycol, le xylèneglycol, le butanediol, le pentanediol, le dipropylèneglycol, le 2-méthyl-1,5-pentanediol, le 1,6-hexanediol, le diméthanol décaline, le diméthanol bicyclooctane, le cis-1,4-cyclohexane diméthanol, le trans-1,4-cyclohexane diméthanol, le triéthylèneglycol, le 1,10-decanediol, le tricyclodécane diméthanol, le xylèneglycol, le bisphénol A hydrogéné, le tetraméthyl cyclobutanediol, l'ortho-xylèneglycol disubstitué, le méta-xylèneglycol, et les association de ceux-ci.

8. Composition de matière selon la revendication 7, dans laquelle le diol additionnel est présent dans une quantité de 0 à 20 mol % en relation à 100 mol % de la quantité totale du pourcentage molaire de diol.

9. Composition de matière selon l'une des revendications 1 à 8, dans laquelle le polyester a une température de transition vitreuse d'au moins 60°C.

10. Composition de matière selon l'une des revendications 1 à 9, dans laquelle le polyester a un rendement de carbonisation d'au moins 4 %.

11. Composition de matière selon la revendication1, dans laquelle la composition de matière comprend en outre un additif qui est sélectionné parmi le groupe consistant en les antioxydants, les retardants de flamme, les modificateurs d'écoulement, les modificateurs d'impact, les agents colorants, les agent de démoulage, les stabilisateurs de la lumière UV, les stabilisateurs de la chaleur, les agents lubrifiants, les agents antigoutteux, et les combinaisons de ceux-ci, dans laquelle l'additif est présent dans une quantité dans la gamme de 0 à 20 % en poids, en relation au poids total de la composition.

12. Composition de matière selon l'une des revendications 1 à 11, dans laquelle la composition de matière comprend en outre une charge qui est sélectionné parmi le groupe consistant en le carbonate de calcium, le mica, le kaolin, le talc, les fibres de verre, les fibres de carbone, le nanotubes de carbone, le carbonate de magnésium, les sulfates de barium, le sulfate de calcium, le titane, les nano-argiles, les argiles traitées, le noir de carbone, le silice, les hydroxydes d'aluminium, les hydroxydes d'ammonium, les hydroxydes de magnésium, l'oxyde de zirconium, le nano-dioxyde de titane, ou un association de ceux-ci, dans laquelle la charge est présent dans une quantité de 0 à 40 % en poids, en relation au poids total de la composition.

13. Article qui est dérivé de la composition de matière selon l'une des revendications 1-12.

14. Procédé comprenant les étapes suivantes:
a. mélanger:
i. plus de 80 mol % d'un xylèneglycol disubstitué de la formule (I): 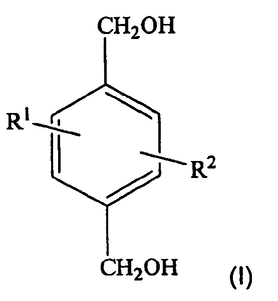 dans laquelle R¹ et R² indépendamment sont sélectionnés parmi le groupe consistant en les résidus aliphatiques, les résidus aromatiques, les résidus cycloaliphatiques, les composés contenant de soufre, les amines, et les halogènes; et
ii. un diacide, pour former un mélange;
b. réchauffer le premier mélange à une température qui est suffisamment élevée pour former une composition de matière qui comprend un polyester dérivé du xylèneglycol disubstitué et du diacide.

15. Procédé comprenant les étapes suivantes:
a. mélanger un polyester et un polycarbonate pour former un premier mélange;
b. réchauffer le premier mélange à une température qui est suffisamment élevé pour former une composition de matière qui est un mélange transparent de
i. plus de 80 mol % d'un diol dérivé d'une structure de xylèneglycol disubstituée de la formule (I): 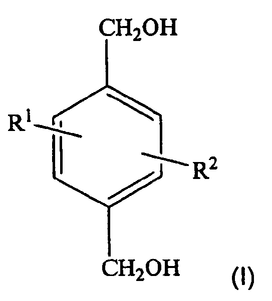 dans laquelle R¹ et R² indépendamment sont sélectionnés parmi le groupe consistant en les résidus aliphatiques, les résidus aromatiques, les résidus cycloaliphatiques, les composés contenant de soufre, les amines, et les halogènes; et un diacide ;
ii. 5 à 85 % en poids d'un polycarbonate.
